# EUROPÄISCHE PATENTSCHRIFT

(11) **EP 3 160 249 B1**
(45) Veröffentlichungstag und Bekanntmachung des Hinweises auf die Patenterteilung: **04.03.2020**
(21) Anmeldenummer: 15732643.0
(22) Anmeldetag: 26.06.2015
(51) Int. Cl.: A23G 3/02, A23G 3/18, A23G 3/34, A23G 3/50, A23G 3/54

(54) **SÜSSWARENHERSTELLUNG MIT SUKZESSIV OPTIMIERTEM FORMPUDER UND DANACH ERHÄLTLICHE SÜSSWAREN**
PRODUCTION OF CONFECTIONERY USING SUCCESSIVELY OPTIMIZED MOLDING POWDER, AND CONFECTIONERY OBTAINABLE THEREBY
FABRICATION DE CONFISERIE AVEC UNE POUDRE DE MOULAGE SUCCESSIVEMENT OPTIMISÉE ET CONFISERIES AINSI OBTENUES

(30) Priorität: 27.06.2014 DE 102014009321
(43) Veröffentlichungstag der Anmeldung: 03.05.2017
(73) Patentinhaber: Katjes Fassin GmbH. + Co. Kommanditgesellschaft, 46446 Emmerich (DE)
(72) Erfinder: AYDIN, Bülent, 46399 Bocholt (DE)
(74) Vertreter: Herzog IP Patentanwalts GmbH
(86) Internationale Anmeldenummer: PCT/EP2015/064530
(87) Internationale Veröffentlichungsnummer: WO 2015/197821

(56) Entgegenhaltungen:
- WO-A2-02/26048
- DE-A1- 2 507 769
- DE-A1- 3 217 409
- DE-A1- 3 640 574
- US-A- 1 627 642
- US-A- 3 033 131
- US-A1- 2010 209 569

## Beschreibung

Die Erfindung bezieht sich auf ein Herstellungsverfahren für Süßwaren; auf eine Süßware, hergestellt nach dem Herstellungsverfahren; auf ein Hartbonbon mit einem Durchmesser, dessen Länge eine streng monoton fallende Funktion ist; auf eine Verwendung zu einem Herstellen von Süßwaren; auf eine Vorrichtung zum Herstellen von Hartbonbons; und auf ein Verfahren in dieser Vorrichtung.

Süßwaren sind ein weit verbreitetes und gemeinhin beliebtes Genussmittel. Eine grundsätzlich im Stand der Technik bekannte Art Süßwaren herzustellen beinhaltet ein Gießen einer flüssigen Süßwarenvorläufermasse in eine ein- oder mehrteilige Form. Zu den Süßwaren, die im Stand der Technik auf diese grundsätzliche Art hergestellt werden, gehören fetthaltige Süßwaren und Süßwaren aus einer Zuckermasse. Eine fetthaltige Süßware ist beispielsweise Schokolade. Zu den Süßwaren aus einer Zuckermasse zählen Bonbons. Bei den Bonbons wird zwischen Hartbonbons und Weichbonbons unterschieden. Zu den Hartbonbons sind auch medizinisch wirksame Bonbons wie Hustenbonbons zu zählen. Ist ein Hartbonbon mit einem Stiel zum Festhalten versehen, spricht man von einem Lutscher. Weichbonbons sind zum Beispiel Fruchtgummibonbons, Toffees und Kaubonbons.

Im Stand der Technik bekannt ist ein Gießen einer Süßwarenvorläufermasse in eine Form aus Metall, wie zum Beispiel Aluminium. Zum Entformen der ausgehärteten Masse, welche die Süßware darstellt, stößt hierbei ein Auswerfwerkzeug durch einen Boden der Metallform. Das Auswerfwerkzeug entformt die Süßware und versieht sie dabei mit einem Abdruck (Ausstoßmarke). Dieses Herstellungsverfahren des Stands der Technik birgt mindestens folgende Nachteile. Das Herstellungsverfahren erlaubt nur eher einfache Süßwarenformen. Ferner wird die Süßware zwangsläufig mit der Ausstoßmarke versehen, was für eine Formgebung der Süßware unerwünscht sein kann. Die verwendeten Metallformen sind eher schwer. Zudem sind die eingesetzten Metallformen in der Herstellung eher teuer. Weiter müssen die verwendeten Formen wegen des Auswerfwerkzeugs eher stabil sein.

In DE 872 149 C wird ein Herstellungsverfahren für Süßwaren beschrieben, bei dem eine Metallform mit einer Gummiauskleidung versehen ist. Diese Gummiauskleidung wird während des Befüllens der Form mit der Süßwarenvorläufermasse durch Saugen an das Innere der Metallform dicht angelegt und zum Entformen wird die Gummiauskleidung von der Metallform gelöst. Dieses Herstellungsverfahren des Stands der Technik birgt mindestens die nachstehenden Nachteile. Das Verfahren beinhaltet eher viele oder fehleranfällige oder beides Verfahrensschritte. Mögliche Fehler sind hierbei beispielsweise ausgewählt aus der Gruppe bestehend aus einer Beschädigung der Gummiauskleidung, einer Herstellung einer nicht wunschgemäß geformten Süßware und ein Misslingen des Entformens oder eine Kombination von mindestens zwei davon. Ferner ist das Verfahren eher aufwendig.

Weiter im Stand der Technik bekannt und ebenfalls in DE 872 149 C, aber auch in DE 10 2007 031 747 A1 erwähnt ist ein Gießen der Süßwarenvorläufermasse in eine Form aus einem elastischen Material, wie zum Beispiel Gummi. Hier wird die Form zum Entformen der Süßware elastisch verformt oder umgestülpt oder beides. Dieses Verfahren des Stands der Technik birgt mindestens die folgenden Nachteile. Bei dem Entformen kann die Süßware leicht beschädigt werden. Bei dem Verfahren entsteht eine eher große Zahl von Ausschussstücken. Das Entformen erfolgt nicht gleichmäßig reproduzierbar.

Einige Nachteile des vorgenannten Herstellungsverfahrens konnten im Stand der Technik vermieden werden indem Formen verwendet werden, die formstabile Teile, einen Außenrand und einen Boden, beinhalten, welche durch elastische Teile verbunden sind (DE 872 149 C). Solche Formen mit Stützkonstruktion sind jedoch eher teuer. Ferner beschränken solche Formen eine Formgebung der Süßwaren.

Ebenfalls im Stand der Technik bekannt ist ein Herstellen von Süßwaren durch Gießen einer Süßwarenvorläufermasse in eine formstabile Kunststoffform, zum Beispiel aus Polycarbonat. Bei diesen Formen ist das Entformen durch ein Haften der Süßware an der Form erschwert. Deshalb ist das Verfahren eher für fetthaltige Süßwaren wie Schokolade geeignet. Dabei wird die zu entformende Süßware auf eine möglichst niedrige Temperatur gekühlt (EP 0 589 820 A1). DE 10 2007 031 747 A1 schlägt vor zum Nutzbarmachen unelastischer Kunststoffformen zum Gießen von Hartbonbonmassen die Innenflächen der Formen mit einem Trennmittel zu benetzen. Die Verwendung des Trennmittels macht das Herstellungsverfahren aufwendiger oder teurer oder beides. Werden dabei nicht alle Innenflächen der Form mit dem Trennmittel benetzt, kann die Süßware nicht, nicht ohne Weiteres, oder nicht ohne die Form oder die Süßware zu beschädigen entformt werden. Ferner kommen ausschließlich als Lebensmittel zugelassene Trennmittel in Betracht. Auch solche Trennmittel können auf der Oberfläche der Süßware unerwünscht sein. Ein Trennmittel kann die Süßware optisch oder geschmacklich oder beides beeinträchtigen. Ein Entfernen des Trennmittels von der Süßware erfordert mindestens einen weiteren Herstellungsschritt.

Weiter im Stand der Technik bekannt ist das Verwenden zweier Halbformen zur Herstellung von Süßwaren (DE 40 04 688 A1). Dabei wird die Süßwarenvorläufermasse in eine der Halbformen gegossen und anschließend die beiden Halbformen zusammengefügt. Bei diesem Verfahren ergeben sich je nach verwendetem Material der Form die oben bereits aufgeführten Nachteile beim Entformen. Ferner beinhaltet das Verfahren mit dem Zusammenfügen der Halbformen einen zusätzlichen Verfahrensschritt. Dieser kann fehleranfällig sein, oder zusätzliche Kosten verursachen, oder beides. Weiter haben die hergestellten Süßwaren regelmäßig an einer Stelle, an der die Halbformen zusammengefügt wurden, eine Naht oder einen Grad oder beides. Solche die Formgebung der Süßware beeinträchtigenden Elemente sind grundsätzlich unerwünscht.

Speziell zum Herstellen von Fruchtgummibonbons ist im Stand der Technik auch ein Gießen der Fruchtgummibonbonmasse in eine Negativform, welche aus einem Maisstärkepuder gebildet ist, bekannt. Dabei wurde die Negativform durch einen Stempel als Positivform in das Maisstärkepuder hineingedrückt. Das Maisstärkepuder befindet sich dazu in einem Puderkasten. Zum Entformen der Fruchtgummibonbons wird der Puderkasten gewendet. Bei diesem Verfahren des Stands der Technik ergeben sich folgende Nachteile. Die durch den Stempel geprägte Negativform ist nicht formstabil. Sie kann insbesondere in dem Zeitraum zwischen dem Prägen der Negativform und dem Gießen der Fruchtgummibonbonmasse verändert oder zerstört oder beides werden. Zudem kann das Entformen misslingen. Es kann ein Anteil des die Negativform bildenden Maisstärkepuders an der Süßware haften bleiben. Ist dieser Anteil zu groß, kann sich dies optisch oder geschmacklich oder beides zu stark auf das Fruchtgummibonbon auswirken.

Im Stand der Technik beschreibt WO 02/26048 A2 ein Verfahren zum Herstellen gelierter, insbesondere fruchtbasierter, Lebensmittel durch Formgießen, insbesondere in Stärkeformen. DE 25 07 769 A1 lehrt ein Verfahren zum Herstellen von Süßwaren auf einer geringfügig geänderten herkömmlichen Mogulanlage bei stark verringertem Formpuderbedarf. US 1,62,642 A betrifft die Herstellung beschichteter Süßwaren. Auch hierbei wird Stärkepuder eingesetzt.

Allgemein ist es eine Aufgabe der vorliegenden Erfindung, einen Nachteil, der sich aus dem Stand der Technik ergibt, zumindest teilweise zu überwinden. Eine Aufgabe der Erfindung ist es, ein Herstellungsverfahren für eine Süßware bereitzustellen, bei dem ein Entformen eines ausgewählt aus der Gruppe bestehend aus weniger fehleranfällig, erleichtert, vereinfacht, und besser reproduzierbar, oder eine Kombination von mindestens zwei davon ist. Eine weitere Aufgabe der Erfindung ist es, ein Herstellungsverfahren für eine Süßware bereitzustellen, wobei eine Negativform in einem Puder formstabiler ist. Ferner ist es eine Aufgabe der vorliegenden Erfindung, ein Herstellungsverfahren für eine Süßware bereitzustellen, wobei die Süßware mit Hilfe einer Negativform in einem Puder hergestellt wird, wobei das Puder möglichst oft wiederverwendet werden kann. Ferner ist es eine Aufgabe der vorliegenden Erfindung, ein Herstellungsverfahren für eine Süßware bereitzustellen, wobei die Süßware mit Hilfe einer Negativform in einem Puder hergestellt wird, wobei möglichst wenig frisches Puder benötigt wird. Eine weitere Aufgabe der vorliegenden Erfindung ist es, ein kostengünstiges Herstellungsverfahren für eine Süßware bereitzustellen. Weiter ist es eine Aufgabe der vorliegenden Erfindung, ein Herstellungsverfahren für eine Süßware bereitzustellen, wobei die Süßware mit Hilfe einer Negativform in einem Puder hergestellt wird, wobei bei einem Entformen möglichst wenig Puder an der Süßware verbleibt. Weiter ist es eine Aufgabe der vorliegenden Erfindung, ein Herstellungsverfahren für eine Süßware bereitzustellen, wobei das Herstellungsverfahren eine geringere Lagerkapazität für Formgusswerkzeuge benötigt. Weiter ist es eine Aufgabe der vorliegenden Erfindung, ein Herstellungsverfahren für eine Süßware bereitzustellen, wobei das Herstellungsverfahren geringere Kosten für Formgusswerkzeuge beinhaltet. Weiter ist es eine Aufgabe der vorliegenden Erfindung, ein Herstellungsverfahren für eine Süßware bereitzustellen, wobei das Herstellungsverfahren leicht oder schnell oder beides auf ein Herstellen einer Süßware einer anderen Formgebung umgestellt werden kann. Es ist eine Aufgabe der vorliegenden Erfindung, eine Süßware bereitzustellen, welche keines ausgewählt aus der Gruppe bestehend aus einem Grat, einer Naht, einer Ausstoßmarke, und einem mindestens teilweise um die Süßware umlaufenden Kranz beinhaltet. Es ist eine weitere Aufgabe der vorliegenden Erfindung, eine Süßware bereitzustellen, wobei eine Formgebung einer Oberfläche der Süßware möglichst vielfältig erfolgen kann. Ferner ist es eine Aufgabe der vorliegenden Erfindung, ein Hartbonbon bereitzustellen, welches mindestens einen der vorgenannten Vorteile einer Süßware aufweist. Weiter ist es eine Aufgabe der Erfindung, ein Hartbonbons, beinhaltend zwei oder mehr Lagen bereitzustellen. Eine weitere Aufgabe der Erfindung ist es, zwei- oder mehrfarbige Hartbonbons bereitzustellen. Es ist eine Aufgabe der vorliegenden Erfindung ein mehrlagiges Hartbonbon; beinhaltend eine oder mehr Lagen hergestellt aus einer Schaummasse, oder eine oder mehr Lagen hergestellt aus einer Fruchtmasse, oder beides; bereitzustellen. Ferner ist es eine Aufgabe der vorliegenden Erfindung, ein Herstellungsverfahren für ein Hartbonbon bereitzustellen, welches mindestens einen der vorgenannten Vorteile eines Herstellungsverfahrens aufweist. Außerdem ist es eine Aufgabe der Erfindung ein Herstellungsverfahren für ein Hartbonbon bereitzustellen, wobei das Herstellungsverfahren ein simultanes Gießen von zwei oder mehr verschiedenen Hartbonbonvorläufermassen, bevorzugt zwei oder mehr verschiedenfarbige Hartbonbonvorläufermassen, in eine Form beinhaltet.

Ein Beitrag zur mindestens teilweisen Erfüllung mindestens einer dieser Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.

Einen Beitrag zur Erfüllung mindestens einer der erfindungsgemäßen Aufgaben leistet ein Verfahren beinhaltend als Verfahrensschritte:
a) Bereitstellen einer Süßwarenvorläufermasse, wobei die Süßwarenvorläufermasse flüssig ist;
b) Bereitstellen eines Trägers, tragend ein Pulver,
   wobei das Pulver eine Pulverspiegeloberfläche beinhaltet,
   wobei die Pulverspiegeloberfläche eine Vielzahl von Negativformen beinhaltet;
c) Befüllen der Negativformen mit der Süßwarenvorläufermasse;
d) Härten der Süßwarenvorläufermasse;
wobei das Pulver eine Partikelgrößenverteilung, gekennzeichnet durch ein
i) D₁₀ in einem Bereich von 6 bis 10 µm, bevorzugt von 7 bis 9 µm, bevorzugter von 8 bis 8,8 µm, am bevorzugtesten von 8,35 bis 8,55 µm,
ii) D₅₀ in einem Bereich von 12 bis 16 µm, bevorzugt von 13 bis 15 µm, bevorzugter von 14 bis 15 µm, am bevorzugtesten von 14,2 bis 14,7 µm, und
iii) D₉₀ in einem Bereich von 21 bis 25 µm, bevorzugt von 22 bis 24,5 µm, bevorzugter von 22,5 bis 24,5 µm, am bevorzugtesten von 22,8 bis 24,1 µm, hat.

Ein bevorzugtes Härten beinhaltet ein Abkühlen der Süßwarenvorläufermasse. Ein bevorzugtes Abkühlen erfolgt durch einen aktiven Kühlvorgang oder passiv oder beides. Ein bevorzugter Träger ist ein Behälter. Ein bevorzugter Behälter ist ein Kasten. Ein bevorzugtes Befüllen der Negativformen mit der Süßwarenvorläufermasse ist ein Gießen. Ein bevorzugtes Gießen beinhaltet ein simultanes Gießen der Süßwarenvorläufermasse und mindestens einer weiteren Süßwarenvorläufermasse. Eine bevorzugte weitere Süßwarenvorläufermasse beinhaltet eine von einer Farbe der Süßwarenvorläufermasse verschiedene Farbe.

In einer erfindungsgemäßen Ausführungsform ist die Partikelgrößenverteilung des Pulvers weiter gekennzeichnet durch ein
i) D₁₆ in einem Bereich von 8 bis 11 µm, bevorzugt von 8,5 bis 10,5 µm, bevorzugter von 9 bis 10 µm, am bevorzugtesten von 9,5 bis 9,9 µm,
ii) D₈₄ in einem Bereich von 19 bis 22 µm, bevorzugt von 19,5 bis 21,5 µm, bevorzugter von 20 bis 21,3 µm, am bevorzugtesten von 20,3 bis 21,2 µm, und
iii) D₉₅ in einem Bereich von 25 bis 30 µm, bevorzugt von 25,5 bis 29,5 µm, bevorzugter von 26 bis 29 µm, am bevorzugtesten von 26,3 bis 28,5 µm.

In einer erfindungsgemäßen Ausführungsform ist die Partikelgrößenverteilung des Pulvers weiter gekennzeichnet durch ein
i) Q₁₀ in einem Bereich von 15 bis 20 Vol.-%, bevorzugt von 15,5 bis 19,5 Vol.-%, bevorzugter von 16 bis 19 Vol.-%, am bevorzugtesten von 17,2 bis 18,3 Vol.-%,
ii) Q₂₀ in einem Bereich von 78 bis 85 Vol.-%,k bevorzugt von 78,5 bis 84,5 Vol.-%, bevorzugter von 79 bis 84 Vol.-%, am bevorzugtesten von 79,5 bis 82,7 Vol.-%,
iii) Q₄₀ in einem Bereich von 97 bis 100 Vol.-%, bevorzugt von 97,5 bis 99,9 Vol.-%, bevorzugter von 98 bis 99,9 Vol.-%, am bevorzugtesten von 98,5 bis 99,8 Vol.-%, und
iv) Q₅₀ in einem Bereich von 99 bis 100 Vol.-%, bevorzugt von 99,2 bis 100 Vol.-%, bevorzugter von 99,3 bis 99,9 Vol.-%,
jeweils bezogen auf das Gesamtvolumen des Pulvers.

In einer erfindungsgemäßen Ausführungsform ist das Pulver ein Mehl.

In einer erfindungsgemäßen Ausführungsform hat das Pulver einen Wassergehalt in einem Bereich von 2 bis 10 g/100 g, bevorzugt in einem Bereich von 3 bis 9 g/100 g, bevorzugter in einem Bereich von 3,5 bis 8,5 g/100 g, noch bevorzugter in einem Bereich von 4 bis 7,5 g/100 g, am bevorzugtesten in einem Bereich von 4,6 bis 6,5 g/100 g, bezogen auf das Pulver.

In einer erfindungsgemäßen Ausführungsform ist die Süßwarenvorläufermasse eine Hartbonbonmasse.

In einer erfindungsgemäßen Ausführungsform ist das Härten der Süßwarenvorläufermasse in Verfahrensschritt d) ein Temperieren für eine Dauer in einem Bereich von 0,5 bis 10 Stunden, bevorzugt von 0,5 bis 8 Stunden, bevorzugter von 1 bis 5 Stunden, auf eine Temperatur in einem Bereich von 25 bis 65°C, bevorzugt in einem Bereich von 30 bis 55°C, bevorzugter in einem Bereich von 35 bis 50°C, am bevorzugtesten in einem Bereich von 35 bis 45°C. Bevorzugt werden diese Temperaturen in dem Raum, der häufig als Trockenraum ausgestaltet ist, eingehalten, in denen der Verfahrensschritt d) erfolgt. Wenn als Süßwarenvorläufermasse eine Hartbonbonmasse eingesetzt wird, ist es bevorzugt, die Temperatur in einem Bereich von 25 bis 55°C, bevorzugt in einem Bereich von 26 bis 45°C, bevorzugter in einem Bereich von 27 bis 40°C, am bevorzugtesten in einem Bereich von 28 bis 35°C zu halten.

Einen Beitrag zur Erfüllung mindestens einer der erfindungsgemäßen Aufgaben leistet eine Süßware, erhältlich durch ein erfindungsgemäßes Verfahren.

Offenbart wird ferner ein Erzeugnis, beinhaltend eine Süßware, eine Süßwarenoberfläche und ein Mehl; wobei das Mehl die Süßwarenoberfläche mindestens teilweise überlagert. Eine bevorzugte Süßware ist ein Bonbon. Hierbei ist es nicht notwendig, dass das Mehl mit bloßem Auge sichtbar ist oder gar einen Teil der Süßwarenoberfläche optisch überdeckt. Vielmehr soll das Mehl durch eine geeignete Nachweismethode nachweisbar sein. Eine bevorzugte Nachweismethode ist ein Stärkenachweis mittels Iodprobe oder mittels Iod-Stärke-Reaktion oder beides. Bevorzugt beinhaltet das Erzeugnis nur Spuren des Mehls. Weiterhin bevorzugt beeinträchtigt das Mehl die optische Erscheinung oder den Geschmack oder beides der Süßware nicht.

Bevorzugt ist die Süßware ein Hartbonbon.

Ferner bevorzugt hat das Mehl eine Partikelgrößenverteilung, gekennzeichnet durch ein
i) D₁₀ in einem Bereich von 6 bis 10 µm, bevorzugt von 7 bis 9 µm, bevorzugter von 8 bis 8,8 µm, am bevorzugtesten von 8,35 bis 8,55 µm,
ii) D₅₀ in einem Bereich von 12 bis 16 µm, bevorzugt von 13 bis 15 µm, bevorzugter von 14 bis 15 µm, am bevorzugtesten von 14,2 bis 14,7 µm, und
iii) D₉₀ in einem Bereich von 21 bis 25 µm, bevorzugt von 22 bis 24,5 µm, bevorzugter von 22,5 bis 24,5 µm, am bevorzugtesten von 22,8 bis 24,1 µm.

Weiterhin bevorzugt hat das Mehl eine Partikelgrößenverteilung, gekennzeichnet durch ein
i) D₁₆ in einem Bereich von 8 bis 11 µm, bevorzugt von 8,5 bis 10,5 µm, bevorzugter von 9 bis 10 µm, am bevorzugtesten von 9,5 bis 9,9 µm,
ii) D₈₄ in einem Bereich von 19 bis 22 µm, bevorzugt von 19,5 bis 21,5 µm, bevorzugter von 20 bis 21,3 µm, am bevorzugtesten von 20,3 bis 21,2 µm, und
iii) D₉₅ in einem Bereich von 25 bis 30 µm, bevorzugt von 25,5 bis 29,5 µm, bevorzugter von 26 bis 29 µm, am bevorzugtesten von 26,3 bis 28,5 µm.

Bevorzugt hat das Mehl eine Partikelgrößenverteilung, gekennzeichnet durch ein
i) Q₁₀ in einem Bereich von 15 bis 20 Vol.-%, bevorzugt von 15,5 bis 19,5 Vol.-%, bevorzugter von 16 bis 19 Vol.-%, am bevorzugtesten von 17,2 bis 18,3 Vol.-%,
ii) Q₂₀ in einem Bereich von 78 bis 85 Vol.-%,k bevorzugt von 78,5 bis 84,5 Vol.-%, bevorzugter von 79 bis 84 Vol.-%, am bevorzugtesten von 79,5 bis 82,7 Vol.-%,
iii) Q₄₀ in einem Bereich von 97 bis 100 Vol.-%, bevorzugt von 97,5 bis 99,9 Vol.-%, bevorzugter von 98 bis 99,9 Vol.-%, am bevorzugtesten von 98,5 bis 99,8 Vol.-%, und
iv) Q₅₀ in einem Bereich von 99 bis 100 Vol.-%, bevorzugt von 99,2 bis 100 Vol.-%, bevorzugter von 99,3 bis 99,9 Vol.-%,
jeweils bezogen auf das Gesamtvolumen des Mehls.

Ferner bevorzugt hat das Mehl einen Wassergehalt in einem Bereich von 2 bis 10 g/100 g, bevorzugt in einem Bereich von 3 bis 9 g/100 g, bevorzugter in einem Bereich von 3,5 bis 8,5 g/100 g, noch bevorzugter in einem Bereich von 4 bis 7,5 g/100 g, am bevorzugtesten in einem Bereich von 4,6 bis 6,5 g/100 g, bezogen auf das Pulver.

Einen Beitrag zur Erfüllung mindestens einer der erfindungsgemäßen Aufgaben leistet ein Hartbonbon beinhaltend eine Oberfläche;
wobei die Oberfläche aus einer Grundfläche, einer Deckfläche, und einer Mantelfläche besteht;
wobei die Deckfläche
a) der Grundfläche gegenüber liegt,
b) durch die Mantelfläche mit der Grundfläche verbunden ist;
wobei ein Durchmesser des Hartbonbons eine streng monoton fallende Funktion einer Position auf einer Verbindungsgeraden von der Grundfläche zu der Deckfläche ist. Hierbei ist der Durchmesser des Hartbonbons eine Länge einer kürzesten Geraden, welche sich ergibt, wenn man das Hartbonbon mit der Grundfläche auf einer ebenen Fläche ablegt, und in einer parallel zu der ebenen Fläche orientierten Querschnittsebene durch das Hartbonbon zwei Punkte auf der Oberfläche des Hartbonbons verbindet, wobei die Gerade einen geometrischen Schwerpunkt des Hartbonbons in der Querschnittsebene beinhaltet. Ein bevorzugtes Hartbonbon hat hierbei annähernd die Form eines Kegelstumpfs oder eines Pyramidenstumpfs oder beides, wobei die Grundfläche nicht zwangsläufig parallel zur Deckfläche orientiert sein muss. Im vorstehenden Fall wird der Durchmesser des Hartbonbons in einer Querschnittsebene senkrecht zu einer Höhe des Kegelstumpfs oder des Pyramidenstumpfs oder beides bestimmt. Ein hierbei bevorzugtes Hartbonbon ist von der Grundfläche zur Deckfläche hin streng monoton verjüngt. Ein weiteres bevorzugtes Hartbonbon, beinhaltet eine erste Schicht und mindestens eine weitere Schicht. Eine bevorzugte weitere Schicht beinhaltet eine Farbe, welche von einer Farbe der der mindestens einen weiteren Schicht verschieden ist. Ein weiteres bevorzugtes Hartbonbon ist mehrfarbig. Hierbei sind bevorzugt verschiedenfarbige Bereiche des Hartbonbons räumlich voneinander getrennt. Die verschiedenfarbigen Bereiche können räumlich voneinander getrennt sein indem sie eines ausgewählt aus der Gruppe bestehend aus horizontal räumlich getrennt, vertikal räumlich getrennt und ineinander verschlungen oder eine Kombination von mindestens zwei davon sind. Eine weitere bevorzugte mindestens eine weitere Schicht ist aus einer Schaumgummimasse hergestellt oder aus einer Fruchtgummimasse hergestellt oder beides. Ein weiteres bevorzugtes Hartbonbon beinhaltet eine erste Schicht hergestellt aus einer Hartbonbonmasse und eine erste weitere Schicht hergestellt aus einer Schaumgummimasse und eine zweite weitere Schicht hergestellt aus einer Fruchtgummimasse. Hierbei ist eine bevorzugte Schaumgummimasse eine Weichbonbonvorläufermasse von schaumiger Konsistenz. Hierbei ist eine Fruchtgummimasse eine nicht schaumige Weichbonbonvorläufermasse. Eine bevorzugte nicht schaumige Weichbonbonvorläufermasse ist eine Fruchtgummivorläufermasse.

In einer erfindungsgemäßen Ausführungsform beinhaltet die Deckfläche ein Relief. Ein bevorzugtes Relief beinhaltet ein geprägtes Muster oder eine geprägte figurative Darstellung oder beides. Eine bevorzugte figurative Darstellung beinhaltet eines ausgewählt aus der Gruppe bestehend aus einem Zeichen, einem Buchstaben, einer Zahl und einer plastische Nachbildung oder eine Kombination von mindestens zwei davon. Eine bevorzugte plastische Nachbildung ist eine Nachbildung von einem ausgewählt aus der Gruppe bestehend aus einem Gegenstand, einem Transportmittel, einem Lebewesen, einem Lebensmittel, einem Nahrungsmittel und einem Bestandteil von einem der Vorgenannten oder eine Kombination aus mindestens zwei davon. Ein bevorzugtes Transportmittel ist eines ausgewählt aus der Gruppe bestehend aus einem Zug, einem Automobil und einem Flugzeug oder eine Kombination von mindestens zwei davon. Ein bevorzugtes Lebewesen ist eines ausgewählt aus der Gruppe bestehend aus einem Mensch, einem Tier und einer Pflanze oder eine Kombination aus mindestens zwei davon. Ein bevorzugtes Lebensmittel ist eine Frucht. Ein bevorzugtes Nahrungsmittel ist eine Frucht. Hierbei ist es unbeachtlich wie lebensecht, verfremdet oder idealisiert die plastische Nachbildung gegenüber einem Vorbild ist.

In einer erfindungsgemäßen Ausführungsform beinhaltet das Hartbonbon keines ausgewählt aus der Gruppe bestehend aus einem Grat, einer Naht, einem mindestens teilweise um das Hartbonbon umlaufenden Kranz, und einer Ausstoßmarke. Eine bevorzugte Ausstoßmarke ist ein Abdruck auf einer Oberfläche des Hartbonbons, wobei der Abdruck durch ein Auswerfwerkzeug geprägt wurde. Ein bevorzugtes Auswerfwerkzeug stößt das Hartbonbon aus einer Form (entformen). Ein weiteres bevorzugtes Auswerfwerkzeug ist ein Auswerfstift. Ein bevorzugter Grat ist ein spitz oder scharfkantig oder beides hervorstehendes Teil auf einer Oberfläche des Hartbonbons. Ein weiterer bevorzugter Grat entsteht bei einem ausgewählt aus der Gruppe bestehend aus einem Formen einer Hartbonbonvorläufermasse zu einem Hartbonbon, einem Entformen des Hartbonbons aus einer Form, einem Gießverfahren und einem Stanzen oder einer Kombination von mindestens zwei davon. Eine bevorzugte Naht ist eines ausgewählt aus der Gruppe bestehend aus einer linienförmige Auswölbung, einer linienförmigen Vertiefung und einem linienförmigen Versatz oder einer Kombination von mindestens zwei davon auf einer Oberfläche des Hartbonbons, wobei die Naht bei einer Formgebung des Hartbonbons objektiv unerwünscht ist. Eine Naht ist bevorzugt objektiv unerwünscht, wenn Sie bei einer optimalen Umsetzung einer Herstellung nicht auftreten würde. Eine Naht ist weiterhin bevorzugt objektiv unerwünscht, wenn sie eine Prägung der Oberfläche des Hartbonbons ist, die nicht in einer das Hartbonbon prägenden Form vorgesehen ist. Eine weitere bevorzugte Naht entsteht bei einem Herstellen des Hartbonbons in einer mehrteiligen Negativform. Eine weitere bevorzugte Naht entsteht bei einem Zusammenfügen mehrerer Hartbonbonteile zu dem Hartbonbon. Eine bevorzugte Naht oder ein bevorzugter Grat oder beides befinden sich auf einer seitlichen Fläche einer Oberfläche des Hartbonbons.

In einer erfindungsgemäßen Ausführungsform ist die Grundfläche konkav. Hierin ist eine Grundfläche konkav, wenn sich die Grundfläche von einem Rand der Grundfläche zu einem geometrischen Schwerpunkt der Grundfläche hin in Richtung der Deckfläche wölbt. Bevorzugt liegt der geometrische Schwerpunkt der Grundfläche mindestens 0,5 mm, bevorzugt mindestens 0,75 mm, am bevorzugtesten mindestens 1 mm, höher als der Rand der Grundfläche, wenn man das Hartbonbon mit der Grundfläche nach unten auf einer ebenen horizontalen Fläche ablegt. Bevorzugt liegt kein Punkt der Grundfläche höher als der geometrische Schwerpunkt der Grundfläche, wenn man das Hartbonbon mit der Grundfläche nach unten auf einer ebene horizontalen Fläche ablegt. Eine besonders bevorzugte Grundfläche ist nicht eben oder nicht konvex oder beides.

Einen Beitrag zur Erfüllung mindestens einer der erfindungsgemäßen Aufgaben leistet eine Verwendung eines Trägers und eines Mehls zum Herstellen von Süßwaren;
wobei der Träger ein Mehl trägt;
wobei das Mehl
a) eine Mehlspiegeloberfläche beinhaltet,
b) eine Partikelgrößenverteilung, gekennzeichnet durch ein
   i) D₁₀ in einem Bereich von 6 bis 10 µm, bevorzugt von 7 bis 9 µm, bevorzugter von 8 bis 8,8 µm, am bevorzugtesten von 8,35 bis 8,55 µm,
   ii) D₅₀ in einem Bereich von 12 bis 16 µm, bevorzugt von 13 bis 15 µm, bevorzugter von 14 bis 15 µm, am bevorzugtesten von 14,2 bis 14,7 µm, und
   iii) D₉₀ in einem Bereich von 21 bis 25 µm, bevorzugt von 22 bis 24,5 µm, bevorzugter von 22,5 bis 24,5 µm, am bevorzugtesten von 22,8 bis 24,1 µm hat,
c) einen Wassergehalt in einem Bereich von 2 bis 10 g/100 g, bevorzugt in einem Bereich von 3 bis 9 g/100 g, bevorzugter in einem Bereich von 3,5 bis 8,5 g/100 g, noch bevorzugter in einem Bereich von 4 bis 7,5 g/100 g, am bevorzugtesten in einem Bereich von 4,6 bis 6,5 g/100 g, bezogen auf das Mehl (102) hat;
wobei die Mehlspiegeloberfläche (103) eine Vielzahl von Negativformen (104) beinhaltet. Die vorstehend angegebenen Partikelgrößenverteilungen gelten auch als bevorzugt für die vorliegende Ausgestaltung.

Einen Beitrag zur Erfüllung mindestens einer der erfindungsgemäßen Aufgaben leistet eine Vorrichtung zum Herstellen von Hartbonbons in einem Prozessablauf, wobei die Vorrichtung beinhaltet
a) einen ersten Behälter, ausgebildet zum Aufnehmen eines Pulvers, wobei der erste Behälter verbunden ist mit einem Pulverauslass, ausgebildet zum Befüllen eines Trägers mit dem Pulver,
   wobei der erste Behälter das Pulver beinhaltet, wobei das Pulver eine Partikelgrößenverteilung, gekennzeichnet durch ein
   i) D₁₀ in einem Bereich von 6 bis 10 µm,
   ii) D₅₀ in einem Bereich von 12 bis 16 µm, und
   iii) D₉₀ in einem Bereich von 21 bis 25 µm,
      hat;
b) einen Abzieher, wobei der Abzieher
   i) prozessabwärts des Pulverauslasses angeordnet ist, und
   ii) ausgebildet ist zum Abziehen des Pulvers in dem Träger unter Erhalt einer Pulverspiegeloberfläche;
c) eine Prägeeinrichtung, wobei die Prägeeinrichtung
   i) prozessabwärts des Abziehers angeordnet ist, und
   ii) ausgebildet ist zum Prägen einer Vielzahl von Negativformen in die Pulverspiegeloberfläche;
d) einen weiteren Behälter, ausgebildet zum Aufnehmen einer flüssigen Hartbonbonmasse, wobei der weitere Behälter verbunden ist mit einem Hartbonbonmassenauslass, ausgebildet zum Befüllen der Negativformen mit der flüssigen Hartbonbonmasse, wobei der Hartbonbonmassenauslass prozessabwärts der Prägeeinrichtung angeordnet ist;
e) eine Kühleinrichtung, wobei die Kühleinrichtung
   i) prozessabwärts des Hartbonbonmassenauslasses angeordnet ist, und
   ii) ausgebildet ist zum Kühlen der Hartbonbonmasse in den Negativformen unter Erhalt einer Vielzahl von Hartbonbons;
f) eine Entformeinrichtung, wobei die Entformeinrichtung
   i) prozessabwärts der Kühleinrichtung angeordnet ist, und
   ii) ausgebildet ist zum Entformen der Hartbonbons aus den Negativformen; und
g) eine Transporteinrichtung, angeordnet und ausgebildet zum Transportieren des Trägers prozessabwärts von dem Pulverauslass zu dem Hartbonbonmassenauslass.

Hierin bezieht sich die Angabe prozessabwärts bevorzugt auf einen Prozessablauf eines Prozesses, zu dessen Durchführung die Vorrichtung ausgebildet ist. Der Prozess ist bevorzugt ein kontinuierlicher Prozess. Der Prozessablauf ist bevorzugt ein Kreislauf. Befindet sich dabei eine erste Einrichtung oder Komponente der Vorrichtung prozessabwärts zu einer weiteren Einrichtung oder Komponente, so befindet sich die weitere Einrichtung oder Komponente in dem Prozessablauf in Richtung zum Endprodukt des Prozesses hin hinter der Einrichtung oder Komponente. Dabei ist ein bevorzugter Prozess ein Herstellen von Hartbonbons. Ein bevorzugtes Endprodukt ist ein Hartbonbon. Eine bevorzugte Kühleinrichtung ist eines ausgewählt aus der Gruppe bestehend aus einem Kühlraum, einem Trockenraum und einem Reiferaum oder eine Kombination aus mindestens zwei davon. Ein bevorzugter Träger ist ein Behälter. Ein bevorzugter Behälter ist ein Kasten, bevorzugt ein Puderkasten. Ein bevorzugtes Befüllen der Negativformen mit der Hartbonbonmasse ist ein Gießen. Ein bevorzugtes Gießen beinhaltet ein simultanes Gießen der Hartbonbonmasse und mindestens einer weiteren Süßwarenvorläufermasse. Eine bevorzugte weitere Süßwarenvorläufermasse beinhaltet eine von einer Farbe der Hartbonbonmasse verschiedene Farbe. Ein bevorzugter Hartbonbonmassenauslass ist eine Düse. Eine bevorzugte Transporteinrichtung ist ein Transportband oder ein Fließband oder beides. Eine weitere bevorzugte Transporteinrichtung beinhaltet eine Vielzahl von rotierenden Rollen. Eine bevorzugte Entformeinrichtung ist ausgebildet zu einem Wenden des Trägers, so dass ein Großteil des Pulvers und der Hartbonbons aus dem Träger herausfallen. Bevorzugt beinhaltet die Entformeinrichtung ein Gitter, auf das die Hartbonbons fallen. Ein bevorzugtes Gitter beinhaltet Öffnungen, durch die Partikel des Pulvers hindurchfallen können und die Hartbonbons auf dem Gitter verbleiben. Eine bevorzugte Entformeinrichtung ist ein Wendetisch. Ein bevorzugter weiterer Behälter ist mit einer Heizung ausgestattet oder thermisch isoliert oder beides. Eine bevorzugte Prägeeinrichtung beinhaltet eine Vielzahl von Formstempeln. Eine bevorzugte Vorrichtung ist eine Mogulanlage. Die Vorrichtung ist bevorzugt ausgebildet zum Herstellen von Hartbonbons.

In einer erfindungsgemäßen Ausführungsform ist die Kühleinrichtung ausgebildet zum Kühlen der Hartbonbonmasse in den Negativformen bei einer Kühleinrichtungstemperatur in einem Bereich von 25 bis 55°C, bevorzugt in einem Bereich von 26 bis 45°C, bevorzugter in einem Bereich von 27 bis 40°C, am bevorzugtesten in einem Bereich von 27 bis 35°C, für eine Kühldauer in einem Bereich von 0,5 bis 10 Stunden, bevorzugt von 0,5 bis 8 Stunden, bevorzugter von 1 bis 5 Stunden. Eine bevorzugte Kühleinrichtungstemperatur ist eine Umgebungstemperatur, bevorzugt von konditionierter Umgebungsluft, in der Kühleinrichtung.

Einen Beitrag zur Erfüllung mindestens einer der erfindungsgemäßen Aufgaben leistet ein Verfahren zum Herstellen von Hartbonbons in der erfindungsgemäßen Vorrichtung. Bevorzugt gelten auch hier die weiteren Ausgestaltungen zu den in diesem Text angegebenen Verfahren, wobei jede dieser Ausgestaltungen mit diesem Verfahren einzeln kombiniert werden kann.

In einer erfindungsgemäßen Ausführungsform wird die Hartbonbonmasse in den Negativformen bei einer Kühleinrichtungstemperatur in einem Bereich von 25 bis 55°C, bevorzugt in einem Bereich von 26 bis 45°C, bevorzugter in einem Bereich von 27 bis 45°C, am bevorzugter in einem Bereich von 27 bis 40°C, bevorzugter in einem Bereich von 27 bis 35°C, am bevorzugtesten in einem Bereich von 15 bis 20°C, für eine Dauer in einem Bereich von 0,5 bis 10 Stunden, bevorzugt von 0,5 bis 8 Stunden, bevorzugter von 1 bis 5 Stunden, temperiert.

Offenbart wird ferner ein Hartbonbon, erhältlich durch das erfindungsgemäße Verfahren zum Herstellen von Hartbonbons.

### Süßware

Eine bevorzugte Süßware ist eine fetthaltige Süßware oder eine Süßware aus einer Zuckermasse oder beides. Eine bevorzugte fetthaltige Süßware beinhaltet eine Schokolade oder einen Kakao oder beides. Eine bevorzugte Süßware aus einer Zuckermasse ist ein Bonbon. Eine bevorzugte Zuckermasse ist eine gekochte Zuckermasse. Ein bevorzugtes Bonbon ist ein Weichbonbon oder ein Hartbonbon oder beides. Eine weitere bevorzugte gekochte Zuckermasse beinhaltet Saccharose, Glucosesirup, Aroma und Genussmittelsäure. Eine bevorzugtere gekochte Zuckermasse beinhaltet zusätzlich zur vorgenannten ein Farbmittel.

Ein Weichbonbon hat bevorzugt eine hochviskose, zähe Konsistenz. Weichbonbons werden bevorzugt beim Verzehr gekaut. Bei dem Kauen löst sich das Weichbonbon bevorzugt nach und nach auf. Ein bevorzugtes Weichbonbon hat einen Wassergehalt in einem Bereich von 1 bis 20 Gew.-%, bevorzugt in einem Bereich von 5 bis 20 Gew.-%, bevorzugter in einem Bereich von 10 bis 20 Gew.-%, am bevorzugtesten in einem Bereich von 15 bis 20 Gew.-%, bezogen auf das Gesamtgewicht des Weichbonbons. Ein bevorzugtes Weichbonbon ist elastisch verformbar. Ein besonders bevorzugtes Weichbonbon hat eine Shore-Härte A von 70 oder kleiner, bevorzugt von 65 oder kleiner, bevorzugter von 60 oder kleiner, bevorzugter von 60 oder kleiner, bevorzugter von 55 oder kleiner, bevorzugter von 50 oder kleiner, bevorzugter von 45 oder kleiner, bevorzugter von 40 oder kleiner, bevorzugter von 35 oder kleiner, bevorzugter von 30 oder kleiner, bevorzugter von 25 oder kleiner, bevorzugter von 20 oder kleiner, noch bevorzugter von 20 oder kleiner, noch bevorzugter von 15 oder kleiner, am bevorzugtesten von 10 oder kleiner. Ein weiteres bevorzugtes Weichbonbon ist eines ausgewählt aus der Gruppe bestehend aus einem Fruchtgummibonbon, einem Toffee und einem Kaubonbon oder eine Kombination von mindestens zwei davon. Ein weiteres bevorzugtes Weichbonbon beinhaltet ein Hydrokolloid. Ein bevorzugtes Hydrokolloid ist Gelatine.

Ein ganz besonders bevorzugtes Bonbon ist ein Hartbonbon. Ein Hartbonbon ist bevorzugt hart und spröde. Ein bevorzugtes Hartbonbon ist nicht elastisch verformbar. Ein bevorzugtes Hartbonbon beinhaltet ein glasartiges Gebilde. Ein weiteres bevorzugtes Hartbonbon hat einen Wassergehalt in einem Bereich von 1 bis 4 Gew.-%, bevorzugt in einem Bereich von 1 bis 3 Gew.-%, bezogen auf das Gesamtgewicht des Hartbonbons. Hartbonbons werden bevorzugt beim Verzehr gelutscht. Man spricht auch von Lutschbonbons. Der Begriff Hartbonbon beinhaltet auch Hartbonbons mit einem Stiel, welche Lutscher genannt werden. Ein ganz besonders bevorzugtes Hartbonbon hat eine Shore-Härte A von größer als 70, bevorzugt größer als 75, bevorzugter größer als 80, bevorzugter größer als 85, bevorzugter größer als 90, noch bevorzugter größer als 95, am bevorzugtesten von 100. Ein weiteres bevorzugtes Hartbonbon ist hygroskopisch. Ein weiteres bevorzugtes Hartbonbon hat einen GF-Wert von weniger als 30 %. Ein weiteres bevorzugtes Hartbonbon beinhaltet keine Gelatine.

Ein weiteres bevorzugtes Bonbon beinhaltet Lakritz. Zu den Bonbons zählen ferner auch Zuckerl, Kamellen, Bolchen und Ähnliches. Eine weitere bevorzugte Süßware beinhaltet eine Füllung. Eine bevorzugte Füllung ist flüssig oder viskos oder beides. Der Begriff Süßware beinhaltet neben süß schmeckenden Süßwaren auch Süßwaren anderer Geschmacksrichtungen wie zum Beispiel sauer oder salzig oder beides. Ferner beinhaltet der Begriff Süßwaren neben Süßwaren als Genussmittel auch Süßwaren mit medizinischer Wirkung wie zum Beispiel Hustenbonbons oder Halsschmerzbonbons.

### Süßwarenvorläufermasse

Eine Süßwarenvorläufermasse ist eine Masse, aus der durch Weiterverarbeitung eine Süßware hergestellt werden kann. Eine bevorzugte Süßwarenvorläufermasse ist eine Hartbonbonmasse. Eine bevorzugte Hartbonbonmasse beinhaltet als wesentlichen Bestandteil einen Zucker oder einen Zuckeraustauschstoff oder beides. Ein bevorzugter Zucker ist einer ausgewählt aus der Gruppe bestehend aus einem Polysaccharid, Saccharose, Glucose, Fruktose und Invertzucker oder eine Kombination von mindestens zwei davon. Ein bevorzugter Zuckeraustauschstoff ist einer ausgewählt aus der Gruppe bestehend aus Isomalt, Mannit, Sorbit, Xylit und Polydextrose oder eine Kombination von mindestens zwei davon. Eine weitere bevorzugte Hartbonbonmasse beinhaltet weiter eines ausgewählt aus der Gruppe bestehend aus einer Milchzubereitung, einem pflanzlichen Fett, einem Emulgator, einer Farbmischung, einem Öl, einem Wirkstoff, einem Pflanzenextrakt und einem Aroma oder eine Kombination aus mindestens zwei davon. Ein bevorzugtes Öl ist ein ätherisches Öl. Ein bevorzugtes ätherisches Öl ist eines ausgewählt aus der Gruppe bestehend aus einem Eukalyptusöl, einem Minzöl und einem Menthol oder eine Kombination von mindestens zwei davon. Ein bevorzugter Wirkstoff zeigt eines ausgewählt aus der Gruppe bestehend aus einer schleimlösenden Wirkung, einer schmerzbetäubenden Wirkung, einer schwellungslindernden Wirkung und einer entzündungshemmenden Wirkung oder eine Kombination von mindestens zwei davon. Ein bevorzugter Pflanzenextrakt ist einer ausgewählt aus der Gruppe bestehend aus einem Kräuterextrakt, einem Wurzelextrakt und einem Rindenextrakt oder eine Kombination von mindestens zwei davon. Ein bevorzugter Kräuterextrakt ist ein Extrakt aus einem ausgewählt aus der Gruppe bestehend aus Salbei, Spitzwegerich, Schlüsselblume und Eibisch oder eine Kombination von mindestens zwei davon. Ein bevorzugter Wurzelextrakt ist ein Süßholzwurzelextrakt, oft auch als Lakritze bezeichnet. Ein bevorzugtes Aroma ist ein künstliches Aroma oder ein natürliches Aroma oder beides. Ein weiteres bevorzugtes Aroma ist ein Fruchtaroma. Während eines Gießens in eine Form hat eine Hartbonbonmasse bevorzugt eine Verarbeitungstemperatur in einem Bereich von 80 bis 150°C, bevorzugt in einem Bereich von 90 bis 140°C, bevorzugter in einem Bereich von 100 bis 120 °C. Die Verarbeitungstemperatur, welche eine Süßwarenvorläufermasse während eines Gießens hat, ist so gewählt, dass sich die Süßwarenvorläufermasse durch gute Fließeigenschaften auszeichnet. In diesem Zustand wird die Süßwarenvorläufermasse als flüssig bezeichnet.

### Pulver

Ein bevorzugtes Pulver ist ein Mehl. Ein bevorzugtes Mehl ist ein pflanzliches Mehl. Ein bevorzugtes pflanzliches Mehl ist ein Maisstärkemehl. Das Mehl wird oft auch als Puder bezeichnet. Ein erfindungsgemäßes Pulver ist sukzessiv optimiert. Ein Pulver wird bevorzugt sukzessiv optimiert, indem es zu einem Herstellen von Süßwaren durch Gießen einer Süßwarenvorläufermasse in Negativformen aus dem Pulver mehrfach verwendet wird. Dabei wird bei jedem n^{ten} Verwenden ein Anteil des wiederverwendeten Pulver durch einen Anteil noch nicht zu einem Herstellen von Süßwaren verwendeten Pulvers ausgetauscht. Dabei ist n eine natürliche Zahl, die größer als 1 ist. Ein bevorzugtes n ist so gewählt, dass in einer laufenden Produktion ein mal pro Tag ein Anteil des wiederverwendeten Pulver durch einen Anteil noch nicht zu einem Herstellen von Süßwaren verwendeten Pulvers ausgetauscht wird. Wird der beschriebene Ablauf oft genug wiederholt, also bei jeder n^{ten} Süßwarenherstellung nur ein Teil des Pulvers gegen unbenutztes ausgetauscht, stellt sich nach einer ausreichend hohen Wiederholungszahl eine statische Zusammensetzung des in den darauffolgenden Süßwarenherstellungen verwendeten Pulvers ein, wobei die statische Zusammensetzung etwa gleichbleibende Anteile unbenutzten Pulvers sowie Pulvers, welches für eine bestimmte Anzahl von Süßwarenherstellungen verwendet worden ist, beinhaltet. Ein sukzessiv optimiertes Pulver hat eine erfindungsgemäße Partikelgrößenverteilung.

### Partikelgrößenverteilung

Zum Spezifizieren von Partikelgrößenverteilungen werden gemäß der Erfindung Werte Dₓ und Q_{y} verwendet. Dabei ist x eine natürliche Zahl in % und y eine natürliche Zahl in µm. Dₓ gibt den Partikeldurchmesser in µm an, für den x Gew.-% der Partikel kleiner als dieser Partikeldurchmesser sind, bezogen auf das Gesamtgewicht der Partikel. Q_{y} gibt den Anteil der Partikel in Vol.-% bezogen auf das Gesamtvolumen der Partikel an, die einen Partikeldurchmesser von kleiner als y µm haben. Dabei ist der Partikeldurchmesser eine Länge der längsten Geraden, welche einen Anfangspunkt und einen Endpunkt auf der Oberfläche des Partikels hat, wobei die Gerade einen geometrischen Schwerpunkt des Partikels schneidet.

### Messmethoden

Die folgenden Messmethoden wurden im Rahmen der Erfindung benutzt. Sofern nichts anderes angegeben ist wurden die Messungen bei einer Umgebungstemperatur von 25°C, einem Umgebungsluftdruck von 100 kPa (0,986 atm) und einer relativen Luftfeuchtigkeit von 50 % durchgeführt.

### Shore-Härte

Zum Messen der Shore-Härte wurde das Verfahren gemäß VDI/VDE 2616-Blatt 2 (2004-04): "Härteprüfung an Kunststoffen und Gummi" eingesetzt.

### Partikelgrößenverteilung

Die Partikelgrößenverteilungen wurden mit einem HELOS-Laserbeugungssystem (entspricht ISO Standard 13320) der Firma Sympatec GmbH System-Partikel-Technik, Clausthal-Zellerfeld, Deutschland gemessen. Hierzu wurde der Messbereich R3, die Brennweite f der Linse von 100 mm sowie ein x_{Mb} von 0,5/0,9 bis 175,0 µm (der detektierte Partikelgrößenbereich eines Messbereichs mit Angabe der ersten Klasse - untere Klassengrenze / obere Klassengrenze - und obere Grenze der gröbsten Klasse) gewählt. Als Dispergiersystem kam das Trockendispergiersystem RODOS/M der Sympatec GmbH System-Partikel-Technik, Clausthal-Zellerfeld, Deutschland zum Einsatz. Zur Minimierung der Probennahme- und Probenteilungsfehler erfolgte die Teilung des zu vermessenden Materials mittels eines rotierenden Riffelteilers auf die für die Messungen benötigten Mengen. Für jede Probe wurden 3 Teilproben jeweils 1 mal gemessen und der Mittelwert für jede Probe, also über die 3 Teilproben, errechnet. Zur Auswertung der Messdaten wurde die Fraunhofer-Theorie mit dem Sympatec Auswertemodus FREE (Version 5.8.2.0) zu Grunde gelegt. Gemäß der Fraunhofer-Theorie wird die Beugung des Lichts als dominierende Wechselwirkung zwischen den Partikeln und dem Laserlicht angenommen. Weitere Parameter der Messungen sind in der unten stehenden Liste zusammengefasst.

| | |
|---|---|
| Probeneinwaage | 1,50 g |
| Startbedingung der Messung | c.opt ≥ 1 % |
| Stoppbedingung der Messung | 2 s c.opt ≤ 1 % oder 20 s Echtzeit |
| Zeitbasis | 10,00 ms |
| Förderrate VIBRI | 50,00 % |
| Trichterhöhe | 15,00 mm |
| Innendurchmesser der Dispergierstrecke | 4,00 mm |
| Vordruck | 1,50 bar |

### Wassergehalt

Für die Messung des Wassergehalts werden folgende Gerät verwendet: ein Feuchtebestimmer Sartorius MA 30 (Sartorius AG, Göttingen, Deutschland), Aluminium-Einwegschale, Löffel. Der Feuchtebestimmer wird vor der Messung nicht vorgewärmt. Wurde bereits eine Messung mit dem Feuchtebestimmer durchgeführt, wird der Feuchtebestimmer vor einer weiteren Messung mindestens 15 Minuten bei offener Haube abkühlend belassen. Der Feuchtebestimmer wird eingeschaltet. Die Messparameter sind 105°C (Trocknungstemperatur), Auto, 0 - 100 %. Die Haube wird geöffnet und eine Aluminiumschale aufgelegt. Mit der Enter-Taste wird tariert. Eine Probe mit einer Masse in einem Bereich von 5,0 bis 5,5 g wird bereitgestellt. Die Alumniumschale wird auf einen Tisch gestellt und die Probe mit dem Löffel gleichmäßig auf der Schale verteilt. Die Schale wird auf den Halter aufgesetzt und die Haube geschlossen. Der Feuchtebestimmer startet der Messvorgang automatisch. Zeigt der Feuchtebestimmer "END" an wird das Messergebnis abgelesen.

### Beispiele

Die Erfindung wird im Folgenden durch Beispiele und Zeichnungen genauer dargestellt, wobei die Beispiele und Zeichnungen keine Einschränkung der Erfindung bedeuten.

### Beispiel 1 - Hartbonbon

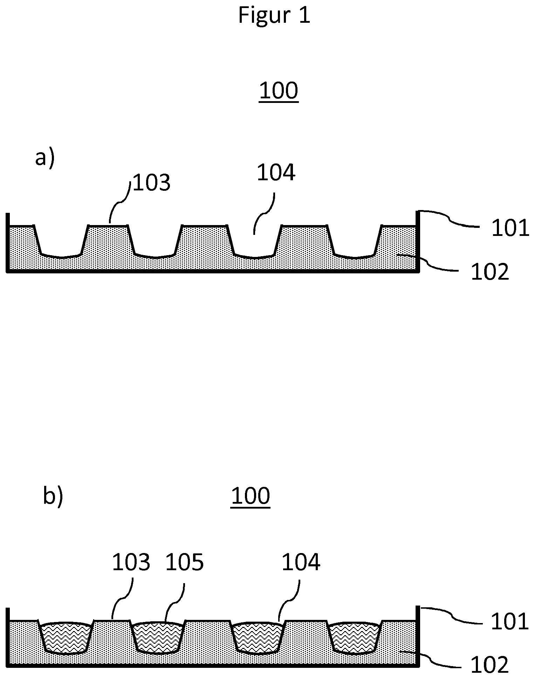

Beispiel 1 betrifft die erfindungsgemäße Herstellung eines erfindungsgemäßen Hartbonbons. Zunächst wurde ein Puderkasten als Träger gemäß Figur 1a) für ein Formpuder bereitgestellt. Als Formpuder wurde ein Maisstärkemehl verwendet, welches eine Partikelgrößenverteilung, gekennzeichnet durch ein D₁₀ von 8,38 µm, ein D₁₆ von 12 µm, ein D₅₀ von 14,27 µm, ein D₈₄ von 22,5 µm, ein D₉₀ von 22,95 µm, ein D₉₅ von 35 µm, sowie durch ein Q₁₀ von 13,4 Vol.-%, ein Q₂₀ von 75,4 Vol.-%, ein Q₄₀ von 95,6 Vol.-%, und ein Q₅₀ von 97,4 Vol.-% hatte. Das Maisstärkemehl hatte ferner einen Wassergehalt von 12,6 g/100g bezogen auf das Maisstärkemehl. Der Puderkasten wurde mit dem Maistärkemehl befüllt und dieses zu einem ebenen Maisstärkemehlspiegel in dem Puderkasten abgezogen. Es wurde ein Formstempel aus Gips/Edelstahl zum Prägen von Negativformen für den Bonbonguss bereitgestellt. Der Formstempel bestand aus einem Halteteil und einem weiteren Teil, welcher die positive Form eines herzustellenden Bonbons hat. Hierbei entspricht die untere Stempelfläche des Formstempels, welche beim Stempeln in das Puder gedrückt wird, der Deckfläche des herzustellenden Hartbonbons. Diese Stempelfläche beinhaltet ein Relief. Das Relief ist eine plastische Nachbildung eines Teils einer Oberfläche einer Himbeere. Mit dem Formstempel wurden Negativformen durch Eindrücken in den Maisstärkespiegel eingeprägt. Die Negativformen wurden gleichmäßig verteilt über den Maisstärkespiegel geprägt, wobei der Formstempel nur so tief in den Maisstärkespiegel eingedrückt wurde, dass unter jeder Negativform mindestens 1 cm Maisstärkemehl verblieb. Dies ist ebenfalls in Figur 1b) schematisch gezeigt. Nach jedem Prägen wurde der Formstempel senkrecht nach oben entfernt ohne die geprägte Negativform zu beschädigen.

Im Weiteren wurde durch Abwiegen der Rohstoffe eine Rezeptur für eine Hartbonbonvorläufermasse zusammengestellt. Die Rezeptur bestand aus
- 47 Gew.-% Saccharose einer Reinheit von 99,5 %, eines pH-Wertes von 7, einer Süßkraft von 100, sowie der EG-Kategorie I;
- 36 Gew.-% Glukosesirup, eingesetzt wurde ein DE 42 SE, pH-Wert 4,8 bis 5,3, Trockensubstanz ca. 80 Gew.-% des Glukosesirups, wobei die Trockensubstanz beinhaltet 6 Gew.-% Dextrose, 37 Gew.-% Maltose, und 57 Gew.-% Polysacharid, jeweils bezogen auf die Trockensubstanz;
- 15 Gew.-% Wasser, konform zur Trinkwasserverordnung;
- 1,5 Gew.-% Säure, gepufferte Milchsäure, Restwasser 20 Gew.-% bezogen auf die Säure, Säurekraft 80, Inversionsgeschwindigkeit 0,49;
- 0,25 Gew.-% Farbe, aus Pflanzenauszügen; und
- 0,25 Gew.-% Aroma, natürliches Aroma aus Früchten als Konzentrat;
jeweils bezogen auf die Rezeptur.

Im Weiteren wurden die Saccharose und das Wasser der Rezeptur in einen Kupferkessel ausreichenden Fassungsvolumens gegeben und die Sacharose bei 110°C gelöst. Dann wurde der Glukosesirup hinzugegeben und die sich ergebende Lösung in dem Kupferkessel unter ständigem Rühren mit einem Rührlöffel endgekocht auf 155 bis 160 °C, um einen Trockensubstanzanteil in einem Bereich von 97 bis 98 Gew.-% der erhaltenen Masse zu erlangen. Die Kochzeit betrug etwa 8 Minuten. Anschließend wurde die Masse ohne Wärmezufuhr belassen und so auf etwa 135°C abgekühlt. Bei dieser Temperatur wurden die Farbe, das Aroma und die Säure gemäß der Rezeptur hinzugegeben, untergerührt und somit eine Hartbonbonvorläufermasse erhalten. Die entstandene Hartbonbonvorläufermasse wurde verwendet, um die wie oben beschrieben erzeugten Negativformen in dem Maisstärkemehl durch Gießen zu befüllen. Es wurden befüllte Negativformen gemäß Figur 1b) erhalten. Anschließend wurde die Hartbonbonvorläufermasse in den Negativformen belassen bis sie abgekühlt und fest war. Somit wurden Hartbonbons erhalten. Die Hartbonbons wurden mit der Hand aus dem Puderkasten entnommen und in ein Küchensieb gelegt. Unter Rütteln des Küchensiebs wurden die Hartbonbons mit Pressluft von anhaftendem Maisstärkemehl befreit. Die Hartbonbons wurden nun bei 17°C Raumtemperatur und einer Luftfeuchte von ca. 40 % in Folie verpackt und anschließend bei 20°C und einer Luftfeuchtigkeit von weniger als 60 % gelagert.

### Beispiel 2 - Hartbonbon

Beispiel 2 betrifft eine weitere erfindungsgemäße Herstellung eines weiteren erfindungsgemäßen Hartbonbons. Beispiel 2 wurde identisch zu Beispiel 1 durchgeführt, wobei jedoch abweichend als Formpuder ein anderes Maisstärkemehl eingesetzt wurde. In Beispiel 2 wurde ein Maisstärkemehl verwendet, welches eine Partikelgrößenverteilung, gekennzeichnet durch ein D₁₀ von 8,49 µm, ein D₁₆ von 9,78 µm, ein D₅₀ von 14,58 µm, ein D₈₄ von 21,1 µm, ein D₉₀ von 23,5 µm, ein D₉₅ von 27,97 µm, sowie durch ein Q₁₀ von 17,41 Vol.-%, ein Q₂₀ von 81,98 Vol.-%, ein Q₄₀ von 98,7 Vol.-%, und ein Q₅₀ von 99,9 Vol.-% hatte. Das Maisstärkemehl hatte ferner einen Wassergehalt von 12,4 g/100g bezogen auf das Maisstärkemehl.

### Beispiel 3 - Hartbonbon

Beispiel 3 betrifft eine weitere erfindungsgemäße Herstellung eines weiteren erfindungsgemäßen Hartbonbons. Beispiel 3 wurde identisch zu Beispiel 1 durchgeführt, wobei jedoch abweichend als Formpuder ein anderes Maisstärkemehl eingesetzt wurde. In Beispiel 3 wurde ein Maisstärkemehl gemäß Figur 1a) verwendet, welches eine Partikelgrößenverteilung, gekennzeichnet durch ein D₁₀ von 8,41 µm, ein D₁₆ von 9,69 µm, ein D₅₀ von 14,38 µm, ein D₈₄ von 20,48 µm, ein D₉₀ von 23,02 µm, ein D₉₅ von 26,64 µm, sowie durch ein Q₁₀ von 17,76 Vol.-%, ein Q₂₀ von 82,08 Vol.-%, ein Q₄₀ von 99,07 Vol.-%, und ein Q₅₀ von 99,45 Vol.-% hatte. Das Maisstärkemehl hatte ferner einen Wassergehalt von 5 g/100g bezogen auf das Maisstärkemehl.

### Beispiel 4 - Weichbonbon

Beispiel 4 betrifft die erfindungsgemäße Herstellung eines erfindungsgemäßen Weichbonbons. Zunächst wurde ein Puderkasten als Träger gemäß Figur 1a) für ein Formpuder bereitgestellt. Als Formpuder wurde ein Maisstärkemehl verwendet welches eine Partikelgrößenverteilung, gekennzeichnet durch ein D₁₀ von 8,49 µm, ein D₁₆ von 13,01 µm, ein D₅₀ von 14,57 µm, ein D₈₄ von 23,1 µm, ein D₉₀ von 23,92 µm, ein D₉₅ von 33,7 µm, sowie durch ein Q₁₀ von 13,9 Vol.-%, ein Q₂₀ von 76,6 Vol.-%, ein Q₄₀ von 95,95 Vol.-%, und ein Q₅₀ von 97,88 Vol.-% hatte. Das Maisstärkemehl hatte ferner einen Wassergehalt von 13,8 g/100g bezogen auf das Maisstärkemehl. Der Puderkasten wurde mit dem Maistärkemehl befüllt und dieses zu einem ebenen Maisstärkemehlspiegel in dem Puderkasten abgezogen. Es wurde ein Formstempel aus Gips/Edelstahl zum Prägen von Negativformen für den Bonbonguss bereitgestellt. Der Formstempel bestand aus einem Halteteil und einem weiteren Teil, welcher die positive Form eines herzustellenden Bonbons hat. Hierbei entspricht die untere Stempelfläche des Formstempels, welche beim Stempeln in das Puder gedrückt wird, der Deckfläche des herzustellenden Hartbonbons. Diese Stempelfläche beinhaltet ein Relief. Das Relief ist eine plastische Nachbildung eines Teils einer Oberfläche einer Erdbeere. Mit dem Formstempel wurden Negativformen durch Eindrücken in den Maisstärkespiegel eingeprägt. Die Negativformen wurden gleichmäßig verteilt über den Maisstärkespiegel geprägt, wobei der Formstempel nur so tief in den Maisstärkespiegel eingedrückt wurde, dass unter jeder Negativform mindestens 1 cm Maisstärkemehl verblieb. Dies ist ebenfalls in Figur 1a) schematisch gezeigt. Nach jedem Prägen wurde der Formstempel senkrecht nach oben entfernt ohne die geprägte Negativform zu beschädigen.

Zunächst wurde durch Abwiegen der Rohstoffe eine Rezeptur zusammengestellt. Die Rezeptur besteht aus 47 Gew.-% Saccharose, 31 Gew.-% Glukosesirup, 15 Gew.-% Wasser, % Gew.-% Gelatine, 1,5 Gew.-% Säure, 0,25 Gew.-% Farbe und 0,25 Gew.-% Aroma, jeweils bezogen auf die Rezeptur.

Im Weiteren wurde durch Abwiegen der Rohstoffe eine Rezeptur für eine Weichbonbonvorläufermasse zusammengestellt. Die Rezeptur bestand aus
- 44 Gew.-% Saccharose einer Reinheit von 99,5 %, eines pH-Wertes von 7, einer Süßkraft von 100, sowie der EG-Kategorie I;
- 31 Gew.-% Glukosesirup, eingesetzt wurde ein DE 42 SE, pH-Wert 4,8 bis 5,3, Trockensubstanz ca. 80 Gew.-% des Glukosesirups, wobei die Trockensubstanz beinhaltet 6 Gew.-% Dextrose, 37 Gew.-% Maltose, und 57 Gew.-% Polysacharid, jeweils bezogen auf die Trockensubstanz;
- 17 Gew.-% Wasser, konform zur Trinkwasserverordnung;
- 6 Gew.-% Gelatine, beinhaltend 84 bis 86 Gew.-% Eiweiß, 9 bis 12 Gew.-% Wasser, 2 bis 4 Gew.-% Mineralstoffe, jeweils bezogen auf die Gelatine;
- 1,5 Gew.-% Säure, Zitronensäue Monohydrat, Restwasser 8,6 Gew.-% bezogen auf die Säure, Säurekraft 90, Inversionsgeschwindigkeit 0,64;
- 0,25 Gew.-% Farbe, aus Fruchtauszügen; und
- 0,25 Gew.-% Aroma, natürliches Aroma aus Früchten als Konzentrat;
jeweils bezogen auf die Rezeptur.

Im Weiteren wurde die Gelatine in dem Wasser gemäß dem Rezept gelöst und eine Gelatinelösung erhalten. Anschließend wurde die Saccharose der Rezeptur in einen Kupferkessel ausreichenden Fassungsvolumens gegeben und die Sacharose bei 110°C gelöst. Dann wurde der Glukosesirup hinzugegeben und die sich ergebende Lösung in dem Kupferkessel unter ständigem Rühren mit einem Rührlöffel endgekocht auf 116 °C. Die Kochzeit betrug etwa 8 Minuten. Anschließend wurde die Masse ohne Wärmezufuhr belassen und so auf etwa 90°C abgekühlt. Bei dieser Temperatur wurden die Gelatinelösung, die Farbe, das Aroma und die Säure gemäß der Rezeptur hinzugegeben, untergerührt und somit eine Weichbonbonvorläufermasse erhalten. Zum Entgasen wurde die Weichbonbonvorläufermasse 10 Minuten ruhend gelassen. Die Weichbonbonvorläufermasse wurde nun in einen Gießbeutel gegeben. Der Gießbeutel wurde verwendet, um die wie oben beschrieben erzeugten Negativformen in dem Maisstärkemehl durch Gießen mit der Weichbonbonvorläufermasse zu befüllen. Bei dem Gießen hatte die Weichbonbonvorläufermasse eine Temperatur von ca. 70°C. Es wurden befüllte Negativformen erhalten. Die Weichbonbonvorläufermasse wurde in den Negativformen im Puderkasten im Trockenraum für 48 Stunden bei einer Temperatur von 30°C gereift und somit Weichbonbons erhalten. Der Puderkasten wurde nun gewendet, so dass die hergestellten Weichbonbons aus den Negativformen entformt wurden, Weichbonbons und Maisstärkemehl fielen aus dem Puderkasten auf ein Gittersieb. Durch Rütteln des Gittersiebs für 1 Minute wurde überschüssiges Maisstärkemehl von den Weichbonbons entfernt. Dabei war das Gittersieb so gewählt, dass die Weichbonbons auf dem Gittersieg verblieben und die Partikel des Maisstärkemehls durch das Gittersieb fielen und darunter in einem Behälter aufgefangen werden konnten. Zusätzlich wurden die Weichbonbons mit Pressluft abgeblasen. Anschließend wurden die Weichbonbons in einer Beölungstrommel beölt, um ein Aneinanderhaften der Weichbonbons zu vermeiden sowie den Weichbonbons einen Glanz zu verleihen. Die beölten Weichbonbons wurden nun in einem Folienbeutel verpackt und anschließend bei 20°C und einer Luftfeuchtigkeit von weniger als 60 % gelagert.

### Beispiel 5 - Weichbonbon

Beispiel 5 betrifft eine weitere erfindungsgemäße Herstellung eines weiteren erfindungsgemäßen Weichbonbons. Beispiel 5 wurde identisch zu Beispiel 4 durchgeführt, wobei jedoch abweichend als Formpuder ein anderes Maisstärkemehl eingesetzt wurde. In Beispiel 5 wurde ein Maisstärkemehl verwendet, welches eine Partikelgrößenverteilung, gekennzeichnet durch ein D₁₀ von 8,40 µm, ein D₁₆ von 9,72 µm, ein D₅₀ von 14,56 µm, ein D₈₄ von 21,12 µm, ein D₉₀ von 23,91 µm, ein D₉₅ von 28,3 µm, sowie durch ein Q₁₀ von 17,56 Vol.-%, ein Q₂₀ von 80,21 Vol.-%, ein Q₄₀ von 99,72 Vol.-%, und ein Q₅₀ von 99,87 Vol.-% hatte. Das Maisstärkemehl hatte ferner einen Wassergehalt von 14,1 g/100g bezogen auf das Maisstärkemehl.

### Beispiel 6 - Weichbonbon

Beispiel 6 betrifft eine weitere erfindungsgemäße Herstellung eines weiteren erfindungsgemäßen Weichbonbons. Beispiel 6 wurde identisch zu Beispiel 4 durchgeführt, wobei jedoch abweichend als Formpuder ein anderes Maisstärkemehl eingesetzt wurde. In Beispiel 6 wurde ein Maisstärkemehl verwendet, welches eine Partikelgrößenverteilung, gekennzeichnet durch ein D₁₀ von 8,40 µm, ein D₁₆ von 9,70 µm, ein D₅₀ von 14,52 µm, ein D₈₄ von 20,99 µm, ein D₉₀ von 23,86 µm, ein D₉₅ von 28,11 µm, sowie durch ein Q₁₀ von 17,69 Vol.-%, ein Q₂₀ von 80,16 Vol.-%, ein Q₄₀ von 99,21 Vol.-%, und ein Q₅₀ von 99,88 Vol.-% hatte. Das Maisstärkemehl hatte ferner einen Wassergehalt von 6 g/100g bezogen auf das Maisstärkemehl.

### Vergleichsbeispiel 1 - Hartbonbon

Vergleichsbeispiel 1 betrifft die nichterfindungsgemäße Herstellung eines nichterfindungsgemäßen Hartbonbons.

Zunächst wurde durch Abwiegen der Rohstoffe eine Rezeptur für eine Hartbonbonvorläufermasse zusammengestellt. Die Rezeptur bestand aus
- 47 Gew.-% Saccharose einer Reinheit von 99,5 %, eines pH-Wertes von 7, einer Süßkraft von 100, sowie der EG-Kategorie I;
- 36 Gew.-% Glukosesirup, eingesetzt wurde ein DE 42 SE, pH-Wert 4,8 bis 5,3, Trockensubstanz ca. 80 Gew.-% des Glukosesirups, wobei die Trockensubstanz beinhaltet 6 Gew.-% Dextrose, 37 Gew.-% Maltose, und 57 Gew.-% Polysacharid, jeweils bezogen auf die Trockensubstanz;
- 15 Gew.-% Wasser, konform zur Trinkwasserverordnung;
- 1,5 Gew.-% Säure, Zitronensäue Monohydrat, Restwasser 8,6 Gew.-% bezogen auf die Säure, Säurekraft 90, Inversionsgeschwindigkeit 0,64;
- 0,25 Gew.-% Farbe, aus Pflanzenauszügen; und
- 0,25 Gew.-% Aroma, natürliches Aroma aus Früchten als Konzentrat;
jeweils bezogen auf die Rezeptur.

Im Weiteren wurde ein Satzkocher zum Kochen verwendet. Der Satzkocher ist ein doppelwandiger dampfbeheizter Rührwerkkessel mit zweistufigem Rührwerk, Brüdenabzug, Mannloch als Einfüllluke, Dampfventil, Temperaturfühler, Nadelventil, schwenkbarem Vakuum- bzw. Entnahmebehälter, Vakuumpumpe, Belüftungs- bzw. Schnüffelventil und Druckanzeige. Die Saccharose und das Wasser der Rezeptur wurden in den Satzkocher gegeben und die Sacharose bei 110°C gelöst. Dann wurde der Glukosesirup hinzugegeben und die sich ergebende Lösung in dem Satzkocher endgekocht auf 140 bis 142 °C, um einen Trockensubstanzanteil von 96 Gew.-% der erhaltenen Masse zu erlangen. Die Kochzeit betrug etwa 8 Minuten. Das Erwärmen und Kochen erfolgte unter ständigem Rühren durch das zweistufige Rührwerk. Dadurch wurde der Wärmeeintrag in die Lösung bzw. Masse unterstützt und alle Rohstoffe homögen vermischt. Durch das Nadelventil wurde die fertig gekochte Masse fächerförmig in den Vakuumbehälter abgelassen. Im Vakuumbehälter wurde die Masse vakuumiert für 2,5 Minuten bei etwa 0,8 bar. Das Vakuum wurde durch das Belüftungsventil gebrochen und anschließend die Farbe, das Aroma und die Säure nach der Rezeptur hinzugegeben, wobei eine Hartbonbonvorläufermasse erhalten wurde. Die Temperatur der Masse betrug hierbei 115 bis 120°C bei einem Trockensubstanzanteil von 98 bis 99 Gew.-%.

Anschließend wurde die Hartbonbonvorläufermasse auf einem Kühltisch temperiert. Der Kühltisch ist ein doppelwandiger Edelstahltisch mit Wasserkreislauf. Vor dem Aufbringen der Hartbonbonvorläufermasse auf den Kühltisch wurde die Edelstahltischplatte mit einem Trennwachs eingefettet. Die Hartbonbonvorläufermasse wurde auf die Edelstahltischplatte aufgebracht und geknetet um die Farbe, das Aroma und die Säure homogen zu verteilen. Dabei wurde die Vorläufermasse mehrmalig eingeschlagen bis eine Temperatur von ca. 80 bis 85°C erreicht war. Dabei wurde die Temperatur des Tisches so reguliert, dass sich kein Kondenswasser bildete.

Für das anschließende Ausformen der Vorläufermasse wurde ein Kegelroller verwendet. Der Kegelroller ist elektrisch und verfügt über 4 konische Kegel und eine höhenverstellbare Kegelwanne. Die temperierte Vorläufermasse wurde durch Rotationsbewegungen der konischen Kegel zu einem Strang geformt. Dabei wurde die Kegelwanne angehoben bzw. abgesenkt, um eine kontinuierliche Zuführung des Strangs zu den Kegelrollen zu erreichen. Vor dem Einsatz der Kegelrollen wurden diese elektrisch vorgewärmt. Der durch das Formen erhaltene Strang hatte eine Temperatur von 75 bis 80°C.

Anschließend wurde der Strang in einem Strangautomat verjüngt. Der Strangautomat beinhaltet dazu 4 Rollenpaare und ist beheizbar. Durch eine stufenlos regelbare Stranggeschwindigkeit wurde eine kontinuierliche Zuführung des Strangs erreicht.

Das anschließende Prägen der Hartbonbons erfolgte in einem Prägeautomaten des Typs Strada der Hänsel Processing GmbH, Hannover, Deutschland. Der von Strangautomat kommende verjüngte Zuckerstrang wurde geradlinig in den Prägeautomaten eingeführt und abschnittsweise geteilt. Die so erhaltenen Hartbonbons fielen nach dem Prägen auf ein Verteilerband. Um eine Deformierung der geprägten Hartbonbons zu vermeiden, mussten diese in direktem Anschluss abgekühlt werden. Dies wurde auf einem Kühlband mittels Luft der Temperatur im Bereich von 16 bis 18°C und einer Feuchtigkeit von ca. 40 % durchgeführt.

Anschließend wurden die abgekühlten Hartbonbons in einer Wickelmaschine des Typs Miniwrap BVK 2000 A/B der Robert Bosch GmbH, Gerlingen-Schillerhöhe, Deutschland einzeln verpackt. Danach wurden die einzeln verpackten Hartbonbons portionsweise in Folienbeutel verpackt und bei 18 bis 20°C und einer Luftfeuchte von weniger als 60 % gelagert.

### Vergleichsbeispiel 2 - Weichbonbon

Vergleichsbeispiel 2 betrifft die nichterfindungsgemäße Herstellung eines nichterfindungsgemäßen Weichbonbons. Das Vergleichsbeispiel 2 wurde identisch zu Beispiel 4 durchgeführt, wobei jedoch abweichend als Formpuder ein anderes Maisstärkemehl eingesetzt wurde. In dem Vergleichsbeispiel 2 wurde ein Maisstärkemehl verwendet, welches eine Partikelgrößenverteilung, gekennzeichnet durch ein D₁₀ von 12,3 µm, ein D₅₀ von 18,2 µm, und ein D₉₀ von 29,7 µm hatte. Das Maisstärkemehl hatte ferner einen Wassergehalt von 13,2 g/100g bezogen auf das Maisstärkemehl.

Die unten stehende Tabelle 1 fasst die Ergebnisse der Beispiele 1 bis 3 sowie des Vergleichsbeispiels 1 zu Hartbonbons zusammen. Es wird deutlich, dass mit dem erfindungsgemäßen Verfahren (Beispiele 1 bis 3) Hartbonbons verschiedenster Formen gefertigt werden können. Insbesondere können die Hartbonbons mit verschiedenste Reliefs und Prägungen versehen werden. Dies ist bei dem nichterfindungsgemäßen Verfahren nach Vergleichsbeispiel 1 mit einem Prägeautomaten deutlich eingeschränkt bzw. aufwendiger. Ferner sind die Hartbonbons der Beispiele 1 bis 3 frei von Graten und Nähten (Formreinheit). Die Hartbonbons nach Vergleichsbeispiel 1 zeigen deutlich unerwünschte Spuren des Herstellungsprozesses wie zum Beispiel eine Naht oder eine unerwünschte Kante im Hartbonbon.

**Tabelle 1: Beispiele und Vergleichsbeispiel zu Hartbonbons (+ bestes Ergebnis, - schlechtestes Ergebnis)**

| | Herstellung | Formvielfalt | Formreinheit |
|---|---|---|---|
| Beispiel 1 | Gießen in Formpuder | + | + |
| Beispiel 2 | Gießen in Formpuder | + | + |
| Beispiel 3 | Gießen in Formpuder | + | + |
| Vergleichsbeispiel 1 | Strang- und Prägeautomat | - | - |

Die weiter unten stehende Tabelle 3 fasst die Ergebnisse der Beispiele 4 bis 6 sowie des Vergleichsbeispiels 2 zu Weichbonbons zusammen. Es wird deutlich, dass die Negativformen in den erfindungsgemäßen Beispielen haltbarer, d.h. weniger anfällig für Zerstörungen, sind als dies für die Negativformen in dem nichterfindungsgemäßen Vergleichsbeispiel 2 der Fall ist. Ferner lassen sich die Weichbonbons in den Beispielen 4 bis 6 besser entformen als im Vergleichsbeispiel 2, nach dem Wenden des Puderkastens verbleibt weniger Maisstärkemehl an den Weichbonbons. Dadurch sind auch die erfindungsgemäß erhaltenen Weichbonbons vorteilhaft gegenüber denen des nichterfindungsgemäßen Vergleichsbeispiels 2.

**Tabelle 2: Beispiele und Vergleichsbeispiel zu Weichbonbons (++ bestes Ergebnis, + schlechter als ++ und besser als -, - schlechtestes Ergebnis)**

| | D₁₀/ D₅₀/ D₉₀ [µm] | D₁₆/ D₈₄/ D₉₅ [µm] | Q₁₀/Q₂₀/ Q₄₀/Q₅₀ [µm] | Wassergehalt des Formpuders [g/100 g] | Haltbarkeit der Negativform | Entformbarkeit / Puderrückstände am Bonbon |
|---|---|---|---|---|---|---|
| Beispiel 4 | 8,49/ 14,57/ 23,92 | 13,01/ 23,1/ 33,7 | 13,9/76,6/ 95,95/ 97,88 | 13,8 | + | + |
| Beispiel 5 | 8,4/ 14,56/ 23,91 | 9,72/ 21,12/ 28,3 | 17,56/80,2 1/99,72/ 99,87 | 14,1 | ++ | + |
| Beispiel 6 | 8,4/ 14,52/ 23,86 | 9,7/ 20,99/ 28,11 | 17,69/80,1 6/99,21/ 99,88 | 6 | ++ | ++ |
| Vergleichsbeispiel 2 | 12,3/ 18,2/ 29,7 | ∼ | ∼ | 13,2 | - | - |

Es zeigen:
- Figur 1a): eine Illustration zu einem erfindungsgemäßen Verfahren;
- Figur 1b): eine weitere Illustration zu einem erfindungsgemäßen Verfahren;
- Figur 2: eine schematische Querschnittsdarstellung eines Erzeugnisses in Draufsicht;
- Figur 3: eine schematische Querschnittsdarstellung eines erfindungsgemäßen Hartbonbons in Seitenansicht;
- Figur 4: eine schematische Querschnittsdarstellung eines weiteren erfindungsgemäßen Hartbonbons in Seitenansicht;
- Figur 5a): eine schematische Querschnittsdarstellung eines nicht erfindungsgemäßen Hartbonbons in Seitenansicht;
- Figur 5b): eine schematische Darstellung des nicht erfindungsgemäßen Hartbonbons in Figur 5a) in Draufsicht;
- Figur 6a): eine schematische Querschnittsdarstellung eines weiteren nicht erfindungsgemäßen Hartbonbons in Seitenansicht;
- Figur 6b): eine schematische Querschnittsdarstellung eines weiteren nicht erfindungsgemäßen Hartbonbons in Seitenansicht;
- Figur 7: eine schematische Querschnittsdarstellung eines weiteren nicht erfindungsgemäßen Hartbonbons in Seitenansicht;
- Figur 8a): eine schematische Querschnittsdarstellung eines weiteren nicht erfindungsgemäßen Hartbonbons in Seitenansicht;
- Figur 8b): eine schematische Darstellung des weiteren nicht erfindungsgemäßen Hartbonbons in Figur 8a) in Draufsicht; und
- Figur 9: eine schematische Darstellung einer erfindungsgemäßen Vorrichtung zum Herstellen von Hartbonbons.

Figur 1a) zeigt eine Illustration zu einem erfindungsgemäßen Verfahren 100. Gezeigt wird eine schematische Querschnittsdarstellung eines Trägers 101, wobei der Träger 101 ein Kasten 101 ist. In dem Kasten 101 befindet sich ein Pulver 102, wobei das Pulver 102 ein Maisstärkemehl 102 ist. Das Maisstärkemehl 102 beinhaltet eine Pulverspiegeloberfläche 103. Der Kasten 101 ist bis zu der Pulverspiegeloberfläche 103 mit dem Maisstärkemehl 102 gefüllt. Die Pulverspiegeloberfläche 103 beinhaltet Negativformen 104. Die Negativformen 104 wurden mit einem Stempel in die Pulverspiegeloberfläche 103 geprägt. Das Maisstärkemehl 102 hat eine Partikelgrößenverteilung gekennzeichnet durch ein D₁₀ von 8,41 µm, ein D₁₆ von 9,69 µm, ein D₅₀ von 14,38 µm. ein D₈₄ von 20,48 µm, ein D₉₀ von 23,02 µm, ein D₉₅ von 26,64 µm, sowie durch ein Q₁₀ von 17,76 Vol.-%, ein Q₂₀ von 82,08 Vol.-%, ein Q₄₀ von 99,07 Vol.-%, und ein Q₅₀ von 99,45 Vol.-%.

Figur 1b) zeigt eine weitere Illustration zu einem erfindungsgemäßen Verfahren. Gezeigt ist die Anordnung in Figur 1a), wobei die Negativformen 104 mit einer Süßwarenvorläufermasse 105 befüllt sind. Die Süßwarenvorläufermasse 105 ist eine Hartbonbonmasse 105.

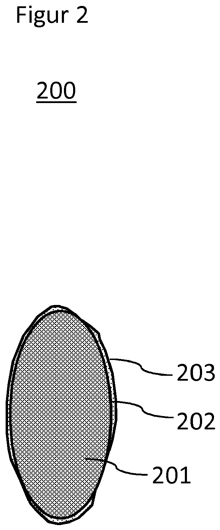

Figur 2 zeigt eine schematische Querschnittsdarstellung eines Erzeugnisses 200 in Draufsicht. Das Erzeugnis 200 beinhaltet eine Süßware 201, eine Süßwarenoberfläche 202 und ein Mehl 203. Die Süßware 201 ist ein Hartbonbon 201. Das Mehl 203 ist ein Maisstärkemehl 203. Das Maisstärkemehl 203 hat eine Partikelgrößenverteilung, gekennzeichnet durch ein D₁₀ von 8,41 µm, ein D₁₆ von 9,69 µm, ein D₅₀ von 14,38 µm. ein D₈₄ von 20,48 µm, ein D₉₀ von 23,02 µm, ein D₉₅ von 26,64 µm, sowie durch ein Q₁₀ von 17,76 Vol.-%, ein Q₂₀ von 82,08 Vol.-%, ein Q₄₀ von 99,07 Vol.-%, und ein Q₅₀ von 99,45 Vol.-%. Das Maisstärkemehl 203 hat einen Wassergehalt von 5 g/100 g bezogen auf das Maisstärkemehl 203. Das Maisstärkemehl 203 befindet sich auf der Süßwarenoberfläche 202.

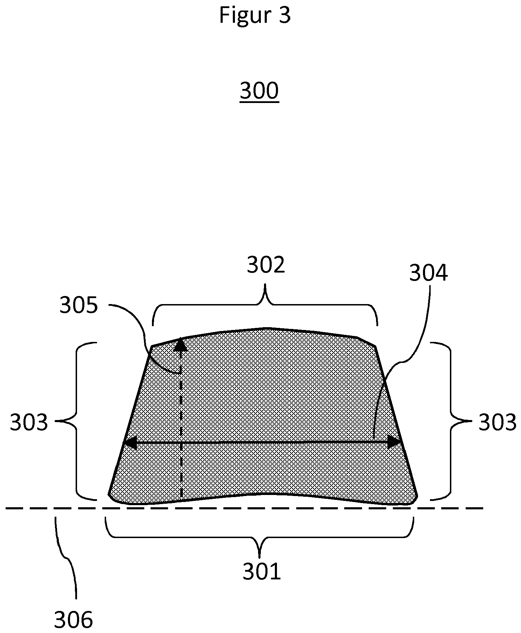

Figur 3 zeigt eine schematische Querschnittsdarstellung eines erfindungsgemäßen Hartbonbons 300 in Seitenansicht. Das Hartbonbon 300 beinhaltet eine Oberfläche. Die Oberfläche besteht aus einer Grundfläche 301, einer Deckfläche 302, und einer Mantelfläche 303. Die Deckfläche 302 liegt der Grundfläche 301 gegenüber. Die Mantelfläche 303 verbindet die Deckfläche 302 mit der Grundfläche 301. Das Hartbonbon 300 ist auf einer ebenen Fläche 306 abgelegt. Eine Länge eines Durchmessers 304 des Hartbonbons 300 ist eine streng monoton fallende Funktion einer Position auf einer Verbindungsgeraden 305 von der Grundfläche 301 zu der Deckfläche 302. Dabei liegt der Durchmesser in einer Querschnittsebene durch das Hartbonbon 300, welche parallel zu der ebenen Fläche 306 orientiert ist. Die Grundfläche 301 ist konkav.

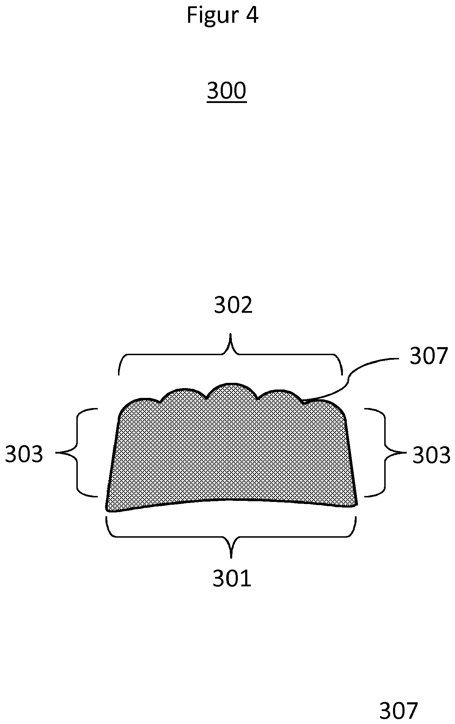

Figur 4 zeigt eine schematische Querschnittsdarstellung eines weiteren erfindungsgemäßen Hartbonbons 300 in Seitenansicht. Das Hartbonbon 300 beinhaltet eine Oberfläche. Die Oberfläche besteht aus einer Grundfläche 301, einer Deckfläche 302, und einer Mantelfläche 303. Die Deckfläche 302 liegt der Grundfläche 301 gegenüber. Die Mantelfläche 303 verbindet die Deckfläche 302 mit der Grundfläche 301. Eine Länge eines Durchmessers 304 (nicht gezeigt) des Hartbonbons 300 ist eine streng monoton fallende Funktion einer Position auf einer Verbindungsgeraden 305 (nicht gezeigt) von der Grundfläche 301 zu der Deckfläche 302. Die Deckfläche 302 beinhaltet ein Relief 307. Das Relief 307 ist eine plastische Nachbildung 307 eines Teils einer Oberfläche einer Himbeere. Die Grundfläche 301 ist konkav.

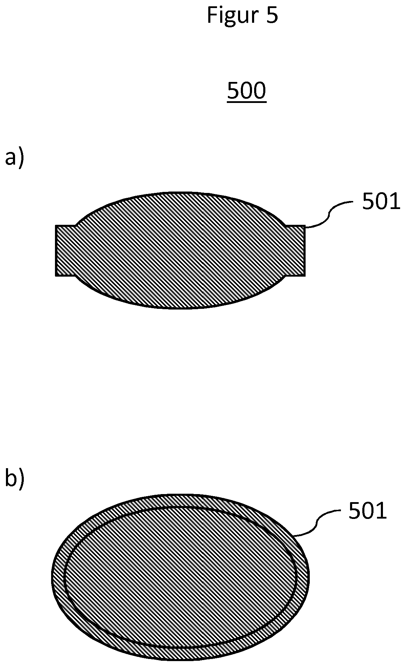

Figur 5a) zeigt eine schematische Querschnittsdarstellung eines nicht erfindungsgemäßen Hartbonbons 500 in Seitenansicht. Das Hartbonbon 500 beinhaltet einen mindestens teilweise um das Hartbonbon umlaufenden Kranz 501.

Figur 5b) zeigt eine schematische Darstellung des nicht erfindungsgemäßen Hartbonbons 300 in Figur 5a) in Draufsicht.

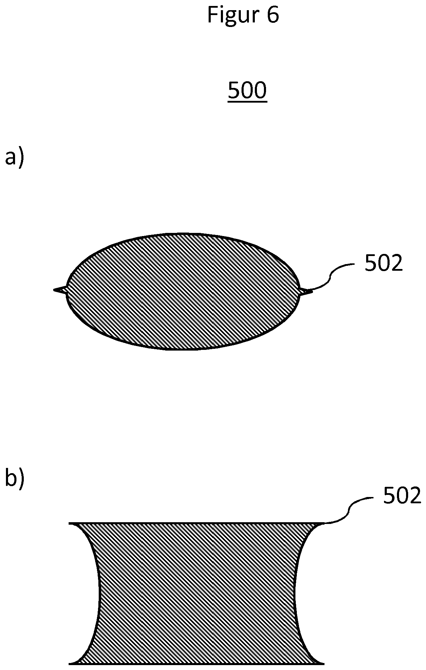

Figur 6a) zeigt eine schematische Querschnittsdarstellung eines weiteren nicht erfindungsgemäßen Hartbonbons 500 in Seitenansicht. Das Hartbonbon 500 beinhaltet einen Grat 502.

Figur 6b) zeigt eine schematische Querschnittsdarstellung eines weiteren nicht erfindungsgemäßen Hartbonbons 500 in Seitenansicht. Das Hartbonbon 500 beinhaltet einen Grat 502.

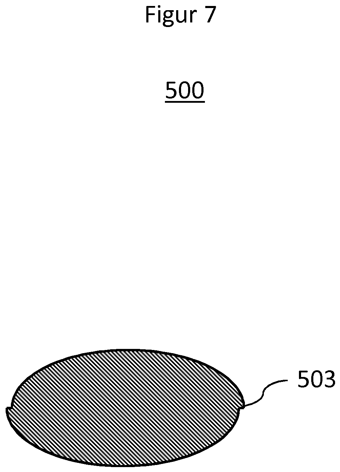

Figur 7 zeigt eine schematische Querschnittsdarstellung eines weiteren nicht erfindungsgemäßen Hartbonbons 500 in Seitenansicht. Das Hartbonbon 500 beinhaltet eine Naht 503. Die Naht 503 ist ein linienförmiger Versatz auf einer Oberfläche des Hartbonbons 500.

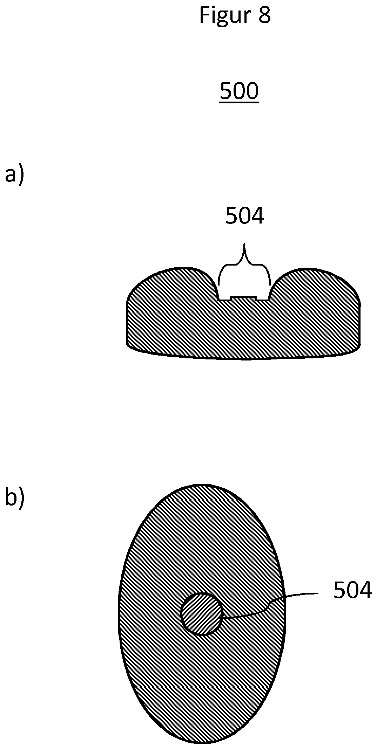

Figur 8a) zeigt eine schematische Querschnittsdarstellung eines weiteren nicht erfindungsgemäßen Hartbonbons 500 in Seitenansicht. Das Hartbonbon 500 beinhaltet eine Ausstoßmarke 504.

Figur 8b) zeigt eine schematische Darstellung des weiteren nicht erfindungsgemäßen Hartbonbons 500 in Figur 8a) in Draufsicht.

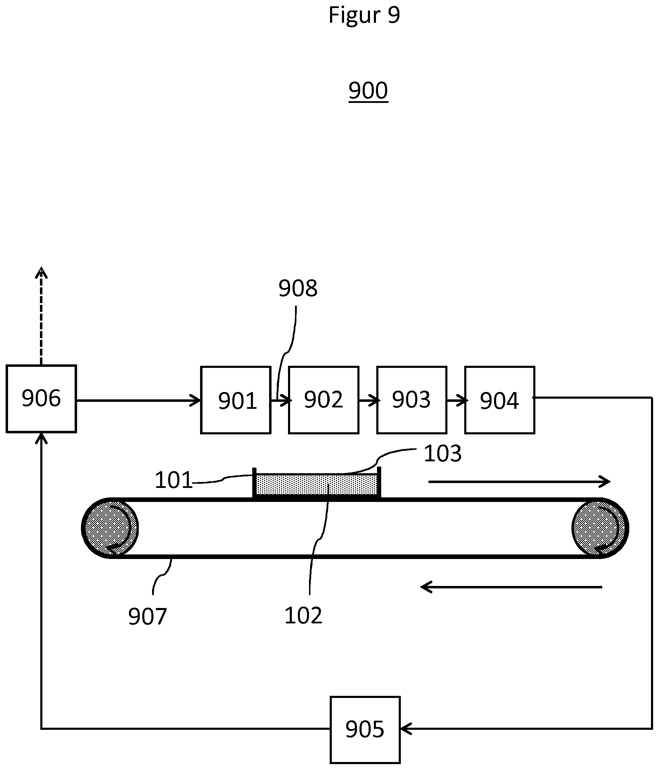

Figur 9 zeigt eine schematische Darstellung einer erfindungsgemäßen Vorrichtung 900 zum Herstellen von Hartbonbons in einem Prozessablauf 908. Der Prozessablauf 908 ist ein Kreislauf, welcher eine kontinuierliche Durchführung des Herstellungsprozesses ermöglicht. Die Vorrichtung 900 beinhaltet einen ersten Behälter 901, der ausgebildet ist zum Aufnehmen eines Pulvers 102, hier ein Maisstärkemehl. Der erste Behälter ist so mit einem Pulverauslass 901 verbunden, dass das Pulver 102 aus dem ersten Behälter 901 dem Pulverauslass 901 zugeführt und über den Pulverauslass 901 ein Träger 101, hier ein Puderkasten, mit dem Pulver 102 befüllt werden kann. In dem Prozessablauf 908 abwärts des Pulverauslasses 901 befindet sich ein Abzieher 902. Der Abzieher 902 ist ausgebildet zum Abziehen des Pulvers 102 in dem Träger 101 unter Erhalt einer ebenen Pulverspiegeloberfläche 103. Prozessabwärts des Abziehers 902 befindet sich eine Prägeeinrichtung 903, welche eine Vielzahl von Formstempel beinhaltet, die in die Pulverspiegeloberfläche 103 herabgesenkt werden können, um eine Vielzahl von Negativformen in der Pulverspiegeloberfläche 103 zu erzeugen. Die Negativformen sind Hartbonbonformen. Weiter beinhaltet die Vorrichtung 900 einen weiteren Behälter 904, ausgebildet zum Aufnehmen einer flüssigen Hartbonbonmasse. Der weitere Behälter 904 ist mit einer Heizung ausgestattet. Ferner ist der weitere Behälter 904 so mit einem Hartbonbonmassenauslass 904 verbunden, dass die Negativformen über den Hartbonbonmassenauslass 904 mit der flüssigen Hartbonbonmasse befüllt werden können. Dabei ist der Hartbonbonmassenauslass 904 eine Moguldüse. Der Hartbonbonmassenauslass 904 ist prozessabwärts der Prägeeinrichtung 903 angeordnet. Prozessabwärts des Hartbonbonmassenauslasses 904 ist eine Kühleinrichtung 905 angeordnet. Die Kühleinrichtung 905 ist ein Kühlraum, geeignet zum Kühlen der Hartbonbonmasse in den Negativformen für 1 bis 5 Stunden bei einer Kühlraumtemperatur von 30°C unter Erhalt einer Vielzahl von Hartbonbons. Prozessabwärts der Kühleinrichtung 905 befindet sich eine Entformeinrichtung 906, welche den Träger 101 wenden, das heißt mit der Pulverspiegeloberfläche 103 nach unten zeigend orientieren, kann. Hierdurch fällt das Pulver 102 und die Hartbonbons aus dem Träger 101 auf ein Gitter, welches zu der Entformeinrichtung 906 gehört. Das Pulver 102 fällt durch Öffnungen in dem Gitter und die Hartbonbons bleiben auf dem Gitter liegen. Um die Hartbonbons von Pulverresten zu befreien, kann das Gitter gerüttelt werden. Die Entformeinrichtung 906 ist ein Wendetisch. Nachdem die Hartbonbons von dem Pulver 102 befreit wurden können Sie gemäß dem gestrichelten Pfeil als Endprodukt die Vorrichtung verlassen. Der Träger 101 kann in der Vorrichtung 900 verbleiben und einen weiteren Prozesskreislaufzyklus durchlaufen. Die Vorrichtung 900 beinhaltet ferner eine Transporteinrichtung 907, hier ein Fließband. Das Fließband transportiert den Träger 101 unter den Pulverauslass 901, von dort zu dem Abzieher 902, von dort zu der Prägeeinrichtung 903 unter die Formstempel, und von dort unter den Hartbonbonmassenauslass 904. Die Vorrichtung 900 ist eine Mogulanlage.

### Liste der Bezugszeichen

- 100: erfindungsgemäßes Verfahren
- 101: Träger
- 102: Pulver
- 103: Pulverspiegeloberfläche
- 104: Negativform
- 105: Süßwarenvorläufermasse
- 200: erfindungsgemäßes Erzeugnis
- 201: Süßware
- 202: Süßwarenoberfläche
- 203: Mehl
- 300: erfindungsgemäßes Hartbonbon
- 301: Grundfläche
- 302: Deckfläche
- 303: Mantelfläche
- 304: Länge eines Durchmessers
- 305: Verbindungsgerade von der Grundfläche zur Deckfläche
- 306: ebene Fläche
- 307: Relief
- 500: nicht erfindungsgemäßes Hartbonbon
- 501: mindestens teilweise um das Hartbonbon umlaufenden Kranz
- 502: Grat
- 503: Naht
- 504: Ausstoßmarke
- 900: Vorrichtung zum Herstellen von Hartbonbons
- 901: erster Behälter mit Pulverauslass
- 902: Abzieher
- 903: Prägeeinrichtung
- 904: weiterer Behälter mit Hartbonbonmassenauslass
- 905: Kühleinrichtung
- 906: Entformeinrichtung
- 907: Transporteinrichtung
- 908: Prozessablauf

## Patentansprüche

1. Ein Verfahren (100) beinhaltend als Verfahrensschritte:
a) Bereitstellen einer Süßwarenvorläufermasse (105),
wobei die Süßwarenvorläufermasse (105) flüssig ist;
b) Bereitstellen eines Trägers (101), tragend ein Pulver (102),
wobei das Pulver (102) eine Pulverspiegeloberfläche (103) beinhaltet,
wobei die Pulverspiegeloberfläche (103) eine Vielzahl von Negativformen (104) beinhaltet;
c) Befüllen der Negativformen (104) mit der Süßwarenvorläufermasse (105);
d) Härten der Süßwarenvorläufermasse (105);
wobei das Pulver (102) eine Partikelgrößenverteilung, **gekennzeichnet durch** ein
i) D₁₀ in einem Bereich von 6 bis 10 µm,
ii) D₅₀ in einem Bereich von 12 bis 16 µm, und
iii) D₉₀ in einem Bereich von 21 bis 25 µm hat.

2. Das Verfahren (100) nach Anspruch 1, wobei die Partikelgrößenverteilung des Pulvers (102) weiter **gekennzeichnet ist durch** ein
i) D₁₆ in einem Bereich von 8 bis 11 µm,
ii) D₈₄ in einem Bereich von 19 bis 22 µm, und
iii) D₉₅ in einem Bereich von 25 bis 30 µm.

3. Das Verfahren (100) nach Anspruch 1 oder 2, wobei die Partikelgrößenverteilung des Pulvers (102) weiter **gekennzeichnet ist durch** ein
i) Q₁₀ in einem Bereich von 15 bis 20 Vol.-%,
ii) Q₂₀ in einem Bereich von 78 bis 85 Vol.-%,
iii) Q₄₀ in einem Bereich von 97 bis 100 Vol.-%, und
iv) Q₅₀ in einem Bereich von 99 bis 100 Vol.-%,
jeweils bezogen auf das Gesamtvolumen des Pulvers (102).

4. Das Verfahren (100) nach einem der vorhergehenden Ansprüche, wobei das Pulver (102) ein Mehl ist.

5. Das Verfahren (100) nach einem der vorhergehenden Ansprüche, wobei das Pulver (102) einen Wassergehalt in einem Bereich von 2 bis 10 g/100 g bezogen auf das Pulver (102) hat.

6. Das Verfahren (100) nach einem der vorhergehenden Ansprüche, wobei die Süßwarenvorläufermasse (105) eine Hartbonbonmasse ist.

7. Das Verfahren (100) nach einem der vorhergehenden Ansprüche, wobei das Härten der Süßwarenvorläufermasse (105) in Verfahrensschritt d) ein Temperieren für eine Dauer in einem Bereich von 0,5 bis 10 Stunden auf eine Temperatur in einem Bereich von 25 bis 65°C.

8. Eine Süßware, erhältlich durch ein Verfahren (100) nach einem der vorhergehenden Ansprüche.

9. Eine Hartbonbon (300) beinhaltend eine Oberfläche;
wobei die Oberfläche aus einer Grundfläche (301), einer Deckfläche (302), und einer Mantelfläche (303) besteht;
wobei die Deckfläche (302)
a) der Grundfläche (301) gegenüber liegt,
b) durch die Mantelfläche (303) mit der Grundfläche (301) verbunden ist;
wobei eine Länge eines Durchmessers (304) des Hartbonbons (300) eine streng monoton fallende Funktion einer Position auf einer Verbindungsgeraden (305) von der Grundfläche (301) zu der Deckfläche (302) ist.

10. Das Hartbonbon (300) nach Anspruch 9, wobei die Deckfläche (302) ein Relief (307) beinhaltet.

11. Das Hartbonbon (300) nach Anspruch 9 oder 10, wobei das Hartbonbon (300) keines ausgewählt aus der Gruppe bestehend aus einem Grat (502), einer Naht (503), einem mindestens teilweise um das Hartbonbon (300) umlaufenden Kranz (501), und einer Ausstoßmarke (504) beinhaltet.

12. Das Hartbonbon (300) nach einem der Ansprüche 9 bis 11, wobei die Grundfläche (301) konkav ist.

13. Eine Verwendung eines Trägers und eines Mehls zum Herstellen von Süßwaren;
wobei der Träger ein Mehl trägt;
wobei das Mehl
a) eine Mehlspiegeloberfläche beinhaltet,
b) eine Partikelgrößenverteilung, **gekennzeichnet durch** ein
i) D₁₀ in einem Bereich von 6 bis 10 µm,
ii) D₅₀ in einem Bereich von 12 bis 16 µm, und
iii) D₉₀ in einem Bereich von 21 bis 25 µm hat,
c) einen Wassergehalt in einem Bereich von 2 bis 8 g/100 g bezogen auf das Mehl hat;
wobei die Mehlspiegeloberfläche eine Vielzahl von Negativformen beinhaltet.

14. Eine Vorrichtung (900), beinhaltend
a) einen ersten Behälter (901), ausgebildet zum Aufnehmen eines Pulvers (102), wobei der erste Behälter (901) verbunden ist mit einem Pulverauslass (901), ausgebildet zum Befüllen eines Trägers (101) mit dem Pulver (102),
wobei der erste Behälter (901) das Pulver (102) beinhaltet,
wobei das Pulver (102) eine Partikelgrößenverteilung, **gekennzeichnet durch** ein
i) D₁₀ in einem Bereich von 6 bis 10 µm,
ii) D₅₀ in einem Bereich von 12 bis 16 µm, und
iii) D₉₀ in einem Bereich von 21 bis 25 µm, hat;
b) einen Abzieher (902), wobei der Abzieher (902)
i) prozessabwärts des Pulverauslasses (901) angeordnet ist, und
ii) ausgebildet ist zum Abziehen des Pulvers (102) in dem Träger (101) unter Erhalt einer Pulverspiegeloberfläche (103);
c) eine Prägeeinrichtung (903), wobei die Prägeeinrichtung (903)
i) prozessabwärts des Abziehers (902) angeordnet ist, und
ii) ausgebildet ist zum Prägen einer Vielzahl von Negativformen (104) in die Pulverspiegeloberfläche (103);
d) einen weiteren Behälter (904), ausgebildet zum Aufnehmen einer flüssigen Hartbonbonmasse, wobei der weitere Behälter (904) verbunden ist mit einem Hartbonbonmassenauslass (904), ausgebildet zum Befüllen der Negativformen (104) mit der flüssigen Hartbonbonmasse, wobei der Hartbonbonmassenauslass (904) prozessabwärts der Prägeeinrichtung (903) angeordnet ist;
e) eine Kühleinrichtung (905), wobei die Kühleinrichtung (905)
i) prozessabwärts des Hartbonbonmassenauslasses (904) angeordnet ist, und
ii) ausgebildet ist zum Kühlen der Hartbonbonmasse in den Negativformen (104) unter Erhalt einer Vielzahl von Hartbonbons;
f) eine Entformeinrichtung (906), wobei die Entformeinrichtung (906)
i) prozessabwärts der Kühleinrichtung (905) angeordnet ist, und
ii) ausgebildet ist zum Entformen der Hartbonbons aus den Negativformen (104); und
g) eine Transporteinrichtung (907), angeordnet und ausgebildet zum Transportieren des Trägers (101) prozessabwärts von dem Pulverauslass (901) zu dem Hartbonbonmassenauslass (904).

15. Die Vorrichtung (900) nach Anspruch 14, wobei die Kühleinrichtung (905) ausgebildet ist zum Kühlen der Hartbonbonmasse in den Negativformen (104) bei einer Kühleinrichtungstemperatur in einem Bereich von 25 bis 55°C für eine Kühldauer in einem Bereich von 0,5 bis 10 Stunden.

16. Ein Verfahren zum Herstellen von Hartbonbons in der Vorrichtung (900) nach Anspruch 14 oder 15.

17. Das Verfahren nach Anspruch 16, wobei die Hartbonbonmasse in den Negativformen (104) bei einer Kühleinrichtungstemperatur in einem Bereich von 25 bis 55°C für eine Dauer in einem Bereich von 0,5 bis 10 Stunden temperiert wird.

## Claims

1. A process (100) containing as process steps:
a) Provide a confectionery precursor mass (105),
wherein the confectionery precursor mass (105) is liquid;
b) providing a carrier (101) carrying a powder (102),
said powder (102) including a powder mirror surface (103),
wherein the powder mirror surface (103) includes a plurality of negative molds (104) ;
c) Fill the negative moulds (104) with the confectionery precursor mass (105);
d) Hardening of the precursor confectionery mass (105);
said powder (102) having a particle size distribution, **characterized by** a
i) D₁₀ in a range from 6 to 10 µm,
ii) D₅₀ in a range of 12 to 16 µm, and
iii) D₉₀ in a range from 21 to 25 µm.

2. The method (100) according to claim 1, wherein the particle size distribution of the powder (102) is further **characterized by** a
i) D₁₆ in a range from 8 to 11 µm,
ii) D₈₄ in a range from 19 to 22 µm, and
iii) D₉₅ in a range from 25 to 30 µm.

3. The method (100) according to claim 1 or 2, wherein the particle size distribution of the powder (102) is further **characterized by** a
i) Q₁₀ in a range from 15 to 20% by volume,
ii) Q₂₀ in a range from 78 to 85 % by volume,
iii) Q₄₀ in a range of 97 to 100 % by volume, and
iv) Q₅₀ in a range from 99 to 100 % by volume,
each referred to the total volume of the powder (102).

4. The method (100) according to one of the preceding claims, wherein the powder (102) is a flour.

5. The method (100) according to any of the foregoing claims, wherein the powder (102) has a water content in a range of 2 to 10 g/100 g based on the powder (102).

6. The method (100) according to one of the preceding claims, wherein the confectionery precursor mass (105) is a hard candy mass.

7. The process (100) according to one of the foregoing claims, wherein curing the confectionery precursor mass (105) in process step d) comprises tempering for a time in a range of 0.5 to 10 hours to a temperature in a range of 25 to 65°C.

8. A confectionery obtainable by a process (100) according to any of the foregoing claims.

9. A hard candy (300) containing a surface;
wherein the surface consists of a base surface (301), a top surface (302), and a shell surface (303);
the cover surface (302) being
a) is opposite the base area (301),
b) is connected to the base surface (301) by the outer surface (303);
wherein a length of a diameter (304) of the hard candy (300) is a strictly monotonously decreasing function of a position on a connecting straight line (305) from the base surface (301) to the top surface (302).

10. The hard candy (300) according to claim 9, whereby the top surface (302) contains a relief (307).

11. The hard candy (300) of claim 9 or 10, wherein the hard candy (300) does not include one selected from the group consisting of a burr (502), a seam (503), a rim (501) at least partially circumscribing the hard candy (300), and an ejection mark (504).

12. The hard candy (300) according to one of the claims 9 to 11, where the base (301) is concave.

13. A use of a carrier and a flour for making confectionery;
wherein the carrier carries a flour;
the flour being
a) a flour mirror surface,
b) a particle size distribution, **characterized by** a
i) D₁₀ in a range from 6 to 10 µm,
ii) D₅₀ in a range of 12 to 16 µm, and
iii) D₉₀ in a range from 21 to 25 µm,
c) has a water content in the range from 2 to 8 g/100 g relative to the flour;
wherein the flour mirror surface includes a plurality of negative molds.

14. A device (900) comprising
a) a first container (901) adapted to receive a powder (102), the first container (901) being connected to a powder outlet (901) adapted to fill a carrier (101) with the powder (102),
the first container (901) containing the powder (102),
said powder (102) having a particle size distribution, **characterized by** a
i) D₁₀ in a range from 6 to 10 µm,
ii) D₅₀ in a range of 12 to 16 µm, and
iii) D₉₀ in a range from 21 to 25 µm;
b) a puller (902), the puller (902) being
i) is disposed downstream of the powder outlet (901), and
ii) is adapted to peel the powder (102) in the substrate (101) to obtain a powder mirror surface (103);
c) an embossing device (903), the embossing device (903)
i) is located downstream of the puller (902), and
ii) for embossing a plurality of negative molds (104) into the powder mirror surface (103);
d) a further container (904) adapted to receive a liquid hard candy mass, the further container (904) being connected to a hard candy mass outlet (904) adapted to fill the negative molds (104) with the liquid hard candy mass, the hard candy mass outlet (904) being disposed downstream of the embossing means (903);
e) a cooling means (905), the cooling means (905) being
i) is disposed downstream of the hard candy mass outlet (904), and
ii) is adapted to cool the hard candy mass in the negative molds (104) to obtain a plurality of hard candies;
f) a demoulding device (906), the demoulding device (906)
i) is located downstream of said cooling means (905), and
ii) is adapted to demould said hard candies from said negative molds (104); and
g) transport means (907) arranged and adapted to transport the carrier (101) process-downstream from the powder outlet (901) to the hard candy mass outlet (904).

15. The apparatus (900) according to claim 14, wherein the cooling means (905) is adapted to cool the hard candy mass in the negative molds (104) at a cooling means temperature in a range of 25 to 55°C for a cooling time in a range of 0.5 to 10 hours.

16. A process for producing hard candies in the apparatus (900) according to claim 14 or 15.

17. The method according to claim 16, wherein the hard candy composition in the negative moulds (104) is tempered at a cooling device temperature in a range of 25 to 55°C for a period in a range of 0.5 to 10 hours.

## Revendications

1. Procédé (100) contenant comme étapes de procédé :
a) Fournir une masse de précurseurs de confiserie (105),
dans laquelle la masse de précurseur de confiserie (105) est liquide ;
b) fournir un support (101) portant une poudre (102),
ladite poudre (102) comprenant une surface miroir en poudre (103),
dans laquelle la surface de miroir en poudre (103) comprend une pluralité de moules négatifs (104) ;
c) Remplir les moules négatifs (104) avec la masse de précurseur de confiserie (105) ;
d) Durcissement de la masse de confiserie du précurseur (105) ;
ladite poudre (102) ayant une distribution granulométrique, **caractérisée par** un groupe
i) D₁₀ dans une plage de 6 à 10 µm,
ii) D₅₀ dans une plage de 12 à 16 µm, et
iii) D₉₀ dans une plage de 21 à 25 µm.

2. Procédé (100) selon la revendication 1, dans lequel la distribution granulométrique de la poudre (102) est en outre **caractérisée par** un groupe
i) D₁₆ dans une plage de 8 à 11 µm,
ii) D₈₄ dans une plage de 19 à 22 µm, et
iii) D₉₅ dans une plage de 25 à 30 µm.

3. Procédé (100) selon la revendication 1 ou 2, dans lequel la distribution granulométrique de la poudre (102) est en outre **caractérisée par** un groupe
i) Q₁₀ dans une plage de 15 à 20 % en volume,
ii) Q₂₀ dans une plage de 78 à 85 % en volume,
iii) Q₄₀ dans une plage de 97 à 100 % en volume, et
iv) Q₅₀ dans une plage de 99 à 100 % en volume,
chacun par rapport au volume total de la poudre (102).

4. Procédé (100) selon l'une des revendications précédentes, dans lequel la poudre (102) est une farine.

5. Procédé (100) selon l'une quelconque des revendications précédentes, dans lequel la poudre (102) a une teneur en eau dans une plage de 2 à 10 g/100 g sur la base de la poudre (102).

6. Procédé (100) selon l'une des revendications précédentes, dans lequel la masse de précurseur de confiserie (105) est une masse de bonbons durs.

7. Procédé (100) selon l'une des revendications précédentes, dans lequel le durcissement de la masse de précurseur de confiserie (105) dans l'étape de procédé d) comprend le revenu pendant un temps compris entre 0,5 et 10 heures à une température comprise entre 25 et 65°C.

8. Confiserie pouvant être obtenue par un procédé (100) selon l'une quelconque des revendications précédentes.

9. Bonbon dur (300) contenant une surface ;
dans laquelle la surface consiste en une surface de base (301), une surface de couverture (302) et une surface de coque (303) ;
la surface de couverture (302) étant
a) est opposée à la surface de base (301),
b) est relié à la surface de base (301) par la surface de coque (303) ;
dans laquelle une longueur d'un diamètre (304) du bonbon dur (300) est une fonction strictement décroissante monotone d'une position sur une ligne droite de connexion (305) de la surface de base (301) à la surface couverture (302).

10. Bonbon dur (300) selon la revendication 9, la surface de couverture (302) contenant un relief (307).Π

11. Bonbon dur (300) selon la revendication 9 ou 10, dans lequel le bonbon dur (300) ne comprend pas un bonbon choisi dans le groupe constitué par une fraise (502), une couture (503), un bord (501) entourant au moins partiellement le bonbon dur (300), et une marque d'éjection (504).

12. Le bonbon dur (300) selon l'une des revendications 9 à 11, où la base (301) est concave.

13. Utilisation d'un support et d'une farine pour la fabrication de confiseries ;
dans laquelle le support porte une farine ;
la farine étant
a) une surface miroir en farine,
b) une distribution granulométrique, **caractérisée par** une
i) D₁₀ dans une plage de 6 à 10 µm,
ii) D₅₀ dans une plage de 12 à 16 µm, et
iii) D₉₀ dans une plage de 21 à 25 µm,
c) a une teneur en eau comprise entre 2 et 8 g/100 g par rapport à la farine ;
dans laquelle la surface du miroir de farine comprend une pluralité de moules négatifs.

14. Dispositif (900) comprenant
a) un premier récipient (901) adapté pour recevoir une poudre (102), le premier récipient (901) étant relié à une sortie de poudre (901) adaptée pour remplir un support (101) avec la poudre (102),
le premier récipient (901) contenant la poudre (102),
ladite poudre (102) ayant une distribution granulométrique, **caractérisée par** un groupe
i) D₁₀ dans une plage de 6 à 10 µm,
ii) D₅₀ dans une plage de 12 à 16 µm, et
iii) D₉₀ dans une plage de 21 à 25 µm;
b) un dispositif de tirage (902), le dispositif de tirage (902) étant
i) disposé en aval de la sortie de poudre (901), et
ii) adapté pour peler la poudre (102) dans le substrat (101) pour obtenir une surface miroir de poudre (103) ;
c) un dispositif de gaufrage (903), le dispositif de gaufrage (903)
i) est situé en aval du dispositif de tirage (902), et
ii) pour gaufrer une pluralité de moules négatifs (104) dans la surface de miroir en poudre (103) ;
d) un autre récipient (904) adapté pour recevoir une masse de bonbons durs liquide, l'autre récipient (904) étant relié à une sortie de masse de bonbons durs (904) adaptée pour remplir les moules négatifs (104) avec la masse de bonbons durs liquide, la sortie de masse de bonbons durs (904) étant disposée après les moyens de gaufrage (903) ;
e) un moyen de refroidissement (905), le moyen de refroidissement (905) étant
i) éliminé en aval de la sortie de masse de bonbons durs (904), et
ii) adapté pour refroidir la masse de bonbons durs dans les moules négatifs (104) pour obtenir une pluralité de bonbons durs ;
f) un dispositif de démoulage (906), le dispositif de démoulage (906) étant
i) situé en aval desdits moyens de refroidissement (905), et
ii) adapté pour démouler lesdits bonbons durs desdits moules négatifs (104) ; et
g) des moyens de transport (907) agencés et adaptés pour transporter le support (101) en aval de la sortie de poudre (901) vers la sortie de masse dure de bonbons (904).

15. Appareil (900) selon la revendication 14, dans lequel le moyen de refroidissement (905) est adapté pour refroidir la masse de bonbons durs dans les moules négatifs (104) à une température du moyen de refroidissement comprise entre 25 et 55°C pendant un temps de refroidissement compris entre 0,5 et 10 heures.

16. Procédé de fabrication de bonbons durs dans l'appareil (900) selon la revendication 14 ou 15.

17. Procédé selon la revendication 16, dans lequel la composition de bonbons durs dans les moules négatifs (104) est tempérée à une température de dispositif de refroidissement comprise entre 25 et 55°C pendant une durée comprise entre 0,5 et 10 heures.
